# EUROPEAN PATENT APPLICATION

(11) **EP 4 815 605 A1**
(43) Date of publication of application: **30.09.2026**
(21) Application number: 24899579.7
(22) Date of filing: 14.11.2024
(51) Int. Cl.: H04W 72/541

(54) **TRANSMISSION METHOD AND COMMUNICATION APPARATUS**

(30) Priority: 08.12.2023 RU 2023132341
(71) Applicant: Huawei Technologies Co., Ltd., Shenzhen, Guangdong 518129 (CN)
(72) Inventor: WANG, Fan, Shenzhen, Guangdong 518129 (CN); MA, Jianglei, Shenzhen, Guangdong 518129 (CN); HU, Yuanzhou, Shenzhen, Guangdong 518129 (CN)
(74) Representative: Goddar, Heinz J.
(86) International application number: PCT/CN2024/131909
(87) International publication number: WO 2025/118937

(57) **Abstract**

A transmission method and a communication apparatus are disclosed, relating to the field of communication technologies. In the method, a first apparatus determines K2 second resources in N2 second resources, where each second resource includes N1 first resources, the first apparatus determines K1*K2 first resources from the K2 second resources, K1 is a positive integer less than or equal to N1, and K2 is a positive integer less than or equal to N2; and the first apparatus transmits first data through the K1*K2 first resources. A nesting relationship between a first resource and a second resource is constructed, so that interference between data transmission of different devices can be reduced. For example, different devices may select respective K2 second resources from the N2 second resources, and select the K1*K2 first resources from the K2 second resources. This can effectively reduce a probability that resources selected by different devices overlap.

## Description

This application claims priority to Russian Patent Application No. 2023132341, filed with the Federal Service for Intellectual Property on December 8, 2023 and entitled "TRANSMISSION METHOD AND COMMUNICATION APPARATUS", which is incorporated herein by reference in its entirety.

### TECHNICAL FIELD

This application relates to the field of communication technologies, and more specifically, to a transmission method and a communication apparatus.

### BACKGROUND

Massive connective multiple access systems need to support a large quantity of devices for simultaneous data transmission. However, resources used for data transmission are limited. In this case, the devices may perform data transmission by using a non-orthogonal multiple access (non-orthogonal multiple access, NoMA) technology. However, interference is likely to occur between data transmission of different devices. For example, when the devices transmit data by using a sparse code multiple access (sparse code multiple access, SCMA) technology, different devices may select some resources from a plurality of resources (these resources are indicated by SCMA codebooks) to send data. However, partial overlap may occur between the resources selected by different devices, which may cause interference.

Therefore, how to reduce interference between data transmission of different devices is an urgent technical problem to be resolved currently.

### SUMMARY

This application provides a transmission method and a communication apparatus, to reduce interference between data transmission of different devices.

According to a first aspect, a transmission method is provided, including: determining K₂ second resources in N₂ second resources, where each second resource includes Ni first resources, N₂ is an integer greater than or equal to K₂, K₂ is a positive integer, and the N₂ second resources are configured resources used for data transmission; determining K₁*K₂ first resources, where the K₁*K₂ first resources belong to N₁*N₂ first resources, N₁ is an integer greater than or equal to K₁, and K₁ is a positive integer; and transmitting first data through the K₁*K₂ first resources.

An execution body of the solution in the first aspect may be a first apparatus, or may be a module (like a chip system) of the first apparatus, or may be a logical node, a logical module, or software that can implement all or some functions of the first apparatus. This is not limited. For ease of description, the following uses the first apparatus as an example for description.

That the first apparatus transmits the first data through the K₁*K₂ first resources may be understood as that the first apparatus sends or receives the first data through the K₁*K₂ first resources.

In the foregoing solution, one second resource includes N₁ first resources, and the N₂ second resources include a total of the N₂*N₁ first resources. The first apparatus selects the K₁*K₂ first resources from the N₂*N₁ first resources, and completes transmission of the first data based on the K₁*K₂ first resources. Different devices select respective K₁*K₂ first resources from the N₂*N₁ first resources. This helps reduce a probability of interference between data transmission of different devices or reduce a degree of interference between data transmission of different devices.

A nesting relationship between a first resource and a second resource is constructed, so that interference between data transmission of different devices can be reduced. For example, different devices select respective K₂ second resources from the N₂ second resources, and select the K₁*K₂ first resources based on the respective K₂ second resources. In this way, different devices can select different quantities of K₁*K₂ first resources to simultaneously perform data transmission (that is, different devices can send data packets of different sizes, or different devices can send data of different bit rates), thereby effectively reducing a probability that resources selected by different devices overlap, and therefore, different quantities of devices can be flexibly supported.

In a possible implementation, determining the K₂ second resources in the N₂ second resources includes: determining the K₂ second resources from the N₂ second resources based on a second sequence.

The second sequence may be understood as an index sequence of resources, and each element in the second sequence corresponds to a position of one second resource in the N₂ second resources. Therefore, the second sequence can indicate positions of the K₂ second resources in the N₂ second resources, and the first apparatus may select the K₂ second resources from the N₂ second resources based on the second sequence.

Different second sequences are designed, so that different devices can select the K₂ second resources from the N₂ second resources based on respective second sequences, and a probability of interference between data transmission of different devices can be reduced.

In a possible implementation, before determining the K₂ second resources from the N₂ second resources based on the second sequence, the method further includes: determining an index of the second sequence; and determining the second sequence from a second sequence set based on the index of the second sequence, where a quantity of sequences in the second sequence set is related to N₂ and K₂.

When the second sequence is a sequence in the second sequence set, the first apparatus may determine the second sequence based on the index of the second sequence in the second sequence set, and may select the K₂ second resources from the N₂ second resources based on the determined second sequence.

In a possible implementation, a quantity of same elements in any two sequences in the second sequence set is less than or equal to L₂, the quantity of sequences in the second sequence set is related to L₂, and L₂ is an integer.

L₂ is designed, so that the quantity of sequences in the sequence set is related to L₂, and generation of the sequences in the sequence set is also related to L₂. Different values of the L₂ parameter are selected, so that different devices can select different second sequences. This can help reduce a probability that resources selected by different devices overlap, to reduce interference between data transmission of different devices.

In a possible implementation, the second sequence set belongs to a second sequence set group, and the second sequence set group includes a plurality of sequence sets.

The second sequence set group is designed, the second sequence set group includes a plurality of sequence sets, and different sequence sets may include different quantities of sequences, so that application scenarios with different quantities of devices can be supported. Different devices may select respective second sequences from the plurality of sequence sets. This can reduce a probability that resources selected by different devices overlap, to further reduce interference between data transmission of different devices.

In a possible implementation, determining the K₁*K₂ first resources includes: determining K₁ first resources from each second resource in the K₂ second resources.

For example, the first apparatus may select a same quantity of first resources from all the second resources. For example, each second resource includes the N₁ first resources, and the first apparatus determines or selects the K₁ first resources from the N₁ first resources, to finally form the K₁*K₂ first resources. In this way, overheads during resource indication can be reduced. When each of a plurality of devices determines respective K₁*K₂ first resources from the same N₁*N₂ first resources, interference between data transmission of different devices can be more easily controlled.

In a possible implementation, determining the K₁ first resources from each second resource in the K₂ second resources includes: determining the K₁ first resources from the N₁ first resources based on a first sequence.

The first sequence may be understood as an index sequence of resources, and each element in the first sequence corresponds to a position of one first resource in the N₁ first resources. Therefore, the first sequence can indicate positions of the K₁ first resources in the N₁ first resources, and the first apparatus may select the K₁ first resources from the N₁ first resources based on the first sequence.

Different first sequences are designed, so that different devices can select the K₁ first resources from the N₁ first resources based on respective first sequences, and a probability of interference between data transmission of different devices can be reduced.

In a possible implementation, positions of the K₁ first resources in the N₁ first resources are the same across all the second resources; or positions of the K₁ first resources in the N₁ first resources are different across all the second resources.

When the positions of the K₁ first resources in the N₁ first resources are the same across all the second resources, the K₁ first resources in one second resource are indicated, so that the K₁ first resources in the remaining second resources may be determined. This can reduce overheads during resource indication.

When the positions of the K₁ first resources in the N₁ first resources are different across all the second resources, combinations of the K₁ first resources in different second resources can be increased, so that different devices can select different resources for data transmission. This can reduce a probability that resources selected by different devices overlap, and further reduce interference between data transmission of different devices.

In a possible implementation, before determining the K₁ first resources from the N₁ first resources based on the first sequence, the method includes: determining an index of the first sequence; and determining the first sequence from a first sequence set based on the index of the first sequence, where a quantity of sequences in the first sequence set is related to N₁ and K₁.

When the first sequence is a sequence in the first sequence set, the first apparatus may determine the first sequence based on the index of the first sequence in the first sequence set, and may select the K₁ first resources from the N₁ first resources based on the determined first sequence.

In a possible implementation, a quantity of same elements in any two sequences in the first sequence set is less than or equal to L₁, the quantity of sequences in the first sequence set is related to L₁, and L₁ is an integer.

L₁ is designed, so that the quantity of sequences in the sequence set is related to L₁, and generation of the sequences in the sequence set is also related to L₁. Different values of the L₁ parameter are selected, so that different devices can select different first sequences. This can reduce a probability that resources selected by different devices overlap, to reduce interference between data transmission of different devices.

In a possible implementation, the first sequence set belongs to a first sequence set group, and the first sequence set group includes a plurality of sequence sets.

The first sequence set group is designed, the first sequence set group includes the plurality of sequence sets, and different sequence sets may include different quantities of sequences, so that application scenarios with different quantities of devices can be supported. Different devices may select respective first sequences from the plurality of sequence sets. This can reduce a probability that resources selected by different devices overlap, to further reduce interference between data transmission of different devices.

In a possible implementation, the N₂ second resources include K₂ groups of second resources, each group of second resources includes Q₂ second resources, Q₂=N₂/K₂, and Q₂ is an integer; or the N₂ second resources include K₂ groups of second resources, a j^{th} group of second resources in the K₂ groups of second resources includes P_{2, j} second resources, ${N}_{2} = {\sum }_{j = 0}^{{K}_{2} - 1} {P}_{2 , j}$, j=0, ..., K₂-1, and P_{2, j} is a positive integer.

When the N₂ second resources include the K₂ groups of second resources, and each group of second resources includes the Q₂ second resources, each group of second resources includes a same quantity of second resources. When the second sequence set is constructed based on the N₂ second resources, complexity of the method is low, and the method is applicable to different L₂ requirements and various possible values of N₂ and K₂.

When the N₂ second resources include the K₂ groups of second resources, and each group of second resources includes a different quantity of second resources, when the second sequence set is constructed based on the N₂ second resources, more quantities and types of sequences may be generated, and more possible values of N₂ and K₂ may be provided.

In a possible implementation, the N₂ second resources include K₂ groups of second resources, each group of second resources includes Q₂ second resources, Q₂=N₂/K₂, Q₂ is an integer, and a j^{th} sequence Sⱼ in the second sequence set satisfies: ${S}_{j} \left(k\right) = k ∗ {Q}_{2} + \left({\sum }_{l = 0}^{{L}_{2}} {k}^{l} ∗ {i}_{l}\right) mod {Q}_{2} , {i}_{l} = 0 , … , {Q}_{2} - 1 ,$ where $j = {\sum }_{l = 0}^{{L}_{2}} {\left({Q}_{2}\right)}^{l} \times {i}_{l} ,$ the second sequence set includes (*Q*₂)^{*L*₂+1} sequences, and k=0, ..., K₂-1.

According to the foregoing formula, in this embodiment of this application, a sequence in the second sequence set can be formed.

In a possible implementation, the N₁ first resources include K₁ groups of first resources, each group of first resources includes Q₁ first resources, Q₁=N₁/K₁, and Q₁ is a positive integer; or the N₁ first resources include K₁ groups of first resources, a j^{th} group of first resources in the K₁ groups of first resources includes P_{1, j} first resources, ${N}_{1} = {\sum }_{j = 0}^{{K}_{1} - 1} {P}_{1 , j}$, j=0, ..., Ki-1, and P_{1, j} is a positive integer.

When the N₁ first resources include the K₁ groups of first resources, and each group of first resources includes the Q₁ first resources, each group of first resources includes a same quantity of first resources. When the first sequence set is constructed based on the N₁ first resources, complexity of the method is low, and the method is applicable to different L₁ requirements and various possible values of N₁ and K₁.

When the N₁ second resources include the K₁ groups of first resources, and each group of first resources includes a different quantity of first resources, when the second sequence set is constructed based on the N₁ first resources, more quantities and types of sequences may be generated, and more possible values of N₁ and K₁ may be provided.

In a possible implementation, the N₁ first resources include K₁ groups of first resources, each group of first resources includes Q₁ first resources, Q₁=N₁/K₁, Q₁ is an integer, and a t^{th} sequence St in the first sequence set satisfies: ${S}_{t} \left(k\right) = k ∗ {Q}_{1} + \left({\sum }_{l = 0}^{{L}_{1}} {k}^{l} ∗ {i}_{l}\right) mod {Q}_{1} , {i}_{l} = 0 , … , {Q}_{1} - 1 ,$ where $t = {\sum }_{l = 0}^{{L}_{1}} {\left({Q}_{1}\right)}^{l} \times {i}_{l} ,$ the second sequence set includes (*Q*₁)^{*L*₁+1} sequences, and k=0, ..., K₁-1.

According to the foregoing formula, in this embodiment of this application, a sequence in the first sequence set can be formed.

In a possible implementation, the method further includes: determining a first resource block group, where the N₁*N₂ first resources one-to-one correspond to N₁*N₂ first resources in the first resource block group, where the first resource block group includes at least one resource block; or the first resource block group includes a part of one resource block.

The first resource block group (resource block group, RBG) may refer to one RBG, or may refer to at least two RBGs. When the first RBG refers to one RBG, the system may be configured with a plurality of RBGs, and the first RBG may be one of the plurality of RBGs. When the first RBG refers to at least two RBGs, the system may be configured with a plurality of RBGs, and the plurality of RBGs may be grouped into a plurality of groups. Each group of RBGs may be referred to as one first RBG. In this case, the first RBG is one group of the plurality of groups of RBGs. For ease of description, the following uses an example in which the first RBG refers to one RBG for description.

The first RBG is determined and a correspondence between the N₁*N₂ first resources and the N₁*N₂ first resources in the first RBG is determined, so that positions of K₁*K₂ first resources that are actually used for transmitting first data can be determined. For example, the positions that are of the K₁*K₂ first resources for transmitting the first data and that are in all resources included in the system may be determined. In addition, in addition to the resource used for data transmission, the first RBG may further include a resource used for reference signal transmission, or may include a resource used for another purpose. This is not limited in this application. Therefore, the N₁*N₂ first resources one-to-one correspond to the N₁*N₂ first resources in the first RBG, and positions of the N₁*N₂ first resources in the first RBG may be determined.

In a possible implementation, the first resource includes F resource elements (resource element, RE), F is a positive integer, and sending the first data through the K₁* K₂ first resources includes: sending the first data through K₁*K₂*F resource elements.

The foregoing resource element is a frequency domain resource unit, for example, may be an RE.

Each first resource includes F resource elements, and complexity is low, so that overheads of signaling indication can be reduced. In addition, the first data is sent through the K₁*K₂*F resource elements, so that a quantity of resource elements for sending the first data can be simply determined.

In a possible implementation, the K₁*K₂*F resource elements one-to-one correspond to K₁*K₂*F resource elements in the first resource block group, and the K₁*K₂*F resource elements in the first resource block group are used for data transmission.

Because the first RBG may include a resource used for data transmission and a resource used for reference signal transmission, and may further include a resource used for another purpose, the K₁*K₂*F resource elements one-to-one correspond to the K₁*K₂*F resource elements in the first RBG, so that positions of the K₁*K₂*F resource elements in the first RBG can be determined, and further positions of the K₁*K₂*F resource elements in all resources included in the system can be determined.

In a possible implementation, the second sequence set is associated with an index of the first RBG; and the index of the first RBG indicates a position of the first RBG in at least one RBG; and the at least one RBG includes a configured resource block group used for data transmission, or the at least one RBG is an RBG included in a system. The at least one RBG includes the configured resource block group used for data transmission, and all resources used for data transmission may be determined based on the at least one RBG. The second sequence set is associated with the index of the first RBG. A second sequence set corresponding to each of the at least one resource block group may be determined based on the index of the first resource block group, and then the second sequence is determined. Further, positions of the K₁*K₂ first resources for data transmission in each of the at least one resource block group may be determined.

In a possible implementation, the first sequence set is associated with the index of the first RBG; and the index of the first RBG indicates the position of the first RBG in the at least one RBG; and the at least one RBG includes the configured resource block group used for data transmission, or the at least one RBG is the resource block group included in the system.

In a possible implementation, the at least one RBG is a resource block group included in a bandwidth part (bandwidth part, BWP).

In a possible implementation, the at least one RBG is a maximum quantity of configured resource block groups that can be used for data transmission.

In a possible implementation, resource elements included in the at least one RBG are resource elements included in the system.

In a possible implementation, resource elements included in the at least one RBG are resource elements included in the BWP. In a possible implementation, resource elements included in the at least one RBG are a maximum quantity of resource elements that can be used for data transmission.

The at least one RBG includes the configured RBG used for data transmission, and all resources used for data transmission may be determined based on the at least one RBG. The first sequence set is associated with the index of the first RBG. A second sequence set corresponding to each of the at least one RBG may be determined based on the index of the first RBG, and then the first sequence is determined. Further, positions of the K₁*K₂ first resources for data transmission in each of the at least one RBG may be determined.

In a possible implementation, sending the first data through the K₁*K₂ first resources includes: determining a third sequence, where the third sequence includes F elements, the third sequence is used to spread second data, sent in one resource element, to F resource elements for transmission, an i^{th} piece of data sent in an i^{th} resource element in the F resource elements is determined based on the second data and an i^{th} element in the F elements, i=0, ..., F-1, and each first resource includes F resource elements; and determining the first data based on the third sequence and the second data.

The third sequence is constructed, and the third sequence is used to spread the second data, sent in one resource element, to the F resource elements for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In a possible implementation, sending the first data through the K₁*K₂ first resources includes: determining a third sequence, where the third sequence includes F elements, the third sequence is used to spread second data, sent in one resource element, to F resource elements for transmission, an i^{th} piece of data sent in an i^{th} resource element in the F resource elements is determined based on the second data and an i^{th} element in the F elements, and i=0, ..., F-1; and each first resource includes F₁ resource elements; and determining, based on the third sequence and the second data, data in the K₁ first resources (K₁*F₁ resource elements) of each second resource, to determine the first data. K₁*F₁ is a multiple of F.

In a possible implementation, sending the first data through the K₁*K₂ first resources includes: determining a fourth sequence, where the fourth sequence includes K₁ elements, the fourth sequence is used to spread third data, sent in one first resource, to the K₁ first resources for transmission, an i^{th} piece of data sent in an i^{th} first resource in the K₁ first resources is determined based on the third data and an i^{th} element in the K₁ elements, and i=0, ..., Ki-1; and determining the first data based on the fourth sequence and the third data.

The fourth sequence is constructed, and the fourth sequence is used to spread the third data, sent in one first resource, to the K₁ first resources for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In a possible implementation, sending the first data through the K₁*K₂ first resources includes: determining a fifth sequence, where the fifth sequence includes K₂ elements, the fifth sequence is used to spread fourth data, sent in one second resource, to the K₂ second resources for transmission, an i^{th} piece of data sent in an i^{th} second resource in the K₂ second resources is determined based on the fourth data and an i^{th} element in the K₂ elements, and i=0, ..., K₂-1; and determining the first data based on the fifth sequence and the fourth data.

The fifth sequence is constructed, and the fifth sequence is used to spread the fourth data, sent in one second resource, to the K₂ second resources for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In a possible implementation, the method further includes: determining a sixth sequence, where the sixth sequence includes D elements, the sixth sequence is used to spread the first data, sent in one third resource, to D third resources for transmission, an i^{th} piece of data sent in an i^{th} third resource in the D third resources is determined based on the first data and an i^{th} element in the D elements, the third resource includes the N₂ second resources, D is a positive integer greater than 1, and i=0, ..., D-1; determining fifth data based on the sixth sequence and the first data; and sending the fifth data through D*K₁*K₂ first resources.

The sixth sequence is constructed, and the sixth sequence is used to spread the fourth data, sent in one third resource, to the D third resources for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In a possible implementation, the first RBG includes a part of one resource block, and N₂ is equal to K₂.

When the first RBG includes a part of one resource block, the N₁*N₂ first resources correspond to only a part of one resource block, and more possibilities of values of N₁ and N₂ may be provided.

According to a second aspect, a communication apparatus is provided. The communication apparatus may be a first apparatus, or may be a device, a module, or the like configured to perform a function of the first apparatus.

In a possible implementation, the communication apparatus may include modules or units that perform the one-to-one corresponding methods/operations/steps/actions described in the first aspect. The module or unit may be implemented by a hardware circuit, software, or a combination of a hardware circuit and software.

According to a third aspect, a communication apparatus is provided. The communication apparatus includes: a processing unit, configured to: determine K₂ second resources in N₂ second resources, where each second resource includes N₁ first resources, N₂ is an integer greater than or equal to K₂, K₂ is an integer, and the N₂ second resources are configured resources used for data transmission; and determine K₁*K₂ first resources, where the K₁*K₂ first resources belong to N₂*N₂ first resources, N₁ is a positive integer greater than or equal to K₁, and K₁ is an integer; and a transceiver unit, configured to transmit first data through the K₁*K₂ first resources.

The communication apparatus may be further configured to perform the solution described in the method according to the first aspect and any possible implementation of the first aspect. Details are not described again.

According to a fourth aspect, a communication apparatus is provided, including a processor. The processor is configured to execute a computer program or instructions, or enable, by using a logic circuit, the communication apparatus to perform the method according to the first aspect and any possible implementation of the first aspect.

In a possible implementation, the communication apparatus further includes a memory. The memory is configured to store the computer program or the instructions.

In a possible implementation, the communication apparatus further includes a communication interface, and the communication interface is configured to input and/or output a signal.

According to a fifth aspect, a communication apparatus is provided, including a logic circuit and an input/output interface. The input/output interface is configured to input and/or output a signal, and the logic circuit is configured to perform the method according to the first aspect and any possible implementation of the first aspect.

According to a sixth aspect, a computer-readable storage medium is provided. The computer-readable storage medium stores a computer program or instructions. When the computer program or the instructions are run on a computer, the method according to the first aspect and any possible implementation of the first aspect is performed.

According to a seventh aspect, a computer program product is provided, including instructions. When the instructions are run on a computer, the method according to the first aspect and any possible implementation of the first aspect is performed.

According to an eighth aspect, a chip system is provided. The chip is connected to a memory, and the chip is configured to read and execute a software program stored in the memory, to perform the method according to the first aspect and any possible implementation of the first aspect.

According to a ninth aspect, a chip system is provided. The chip system includes a communication interface, configured to communicate with another apparatus; and a processor, configured to enable a communication device in which the chip system is installed to perform the method according to the first aspect and any possible implementation of the first aspect.

According to a tenth aspect, a chip system is provided. The chip system includes a processor, a memory, and an input/output port. The memory is configured to store a computer program. The processor is configured to execute the computer program stored in the memory, so that the processor performs the method according to the first aspect and any possible implementation of the first aspect.

According to an eleventh aspect, a chip system is provided. The chip system is used in an electronic device, the chip system includes one or more processors, and the processor is configured to invoke computer instructions to enable the electronic device to perform the method according to the first aspect and any possible implementation of the first aspect.

For descriptions of beneficial effects of any one of the second aspect to the eleventh aspect, refer to the descriptions of the beneficial effects of the first aspect.

### BRIEF DESCRIPTION OF DRAWINGS

FIG. 1 is a diagram of a communication system to which an embodiment of this application is applicable;
FIG. 2 is a schematic interaction flowchart of a transmission method according to an embodiment of this application;
FIG. 3 is a diagram of a relationship between a second resource and a first resource according to an embodiment of this application;
FIG. 4 is a diagram of another relationship between a second resource and a first resource according to an embodiment of this application;
FIG. 5 is a diagram of still another relationship between a second resource and a first resource according to an embodiment of this application;
FIG. 6 is a diagram of a relationship between different sequences in a sequence set according to an embodiment of this application;
FIG. 7 is a diagram of a relationship between a second resource and a resource block group according to an embodiment of this application;
FIG. 8 is a diagram of a relationship between an extension sequence and different resources according to an embodiment of this application;
FIG. 9 is a block diagram of a communication apparatus according to an embodiment of this application; and
FIG. 10 is a block diagram of another communication apparatus according to an embodiment of this application.

### DESCRIPTION OF EMBODIMENTS

The following describes technical solutions of this application with reference to accompanying drawings.

For ease of understanding of embodiments of this application, the following several descriptions are provided first.
1. In this application, unless otherwise specified, "a plurality of or at least two" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if exists) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and any variants thereof are intended to cover a nonexclusive inclusion. For example, a process, method, system, product, or device that includes a series of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information, such as the to-be-enabled information or an index of the to-be-enabled information, may be directly enabled. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.
6. In this application, "preconfigure" may include "predefine", for example, define in a protocol. The "predefine" may be implemented by prestoring, in a device (for example, including network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.
8. The "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.
9. Arrows or boxes shown by dashed lines in diagrams of the accompanying drawings in this specification of this application indicate optional steps or optional modules.
10. In this application, unless otherwise specified, "/" indicates an "or" relationship between associated objects. For example, A/B may indicate A or B. "And/or" in this application describes only an association relationship for describing associated objects and indicates that three relationships may exist. For example, A and/or B may indicate the following three cases: Only A exists, both A and B exist, and only B exists, where A and B may be singular or plural.
11. In this application, "indicating" includes directly indicating (also referred to as explicitly indicating) and implicitly indicating. Directly indicating information A means including the information A. Implicitly indicating information A means indicating the information A based on a correspondence between information A and information B and directly indicating the information B. The correspondence between information A and information B may be predefined, pre-stored, pre-burned, or preconfigured.
12. In this application, that information C is used for determining information D includes that the information D is determined based only on the information C, and also includes that the information D is determined based on the information C and other information. In addition, that the information C is used for determining the information D may further include an indirect determining case. For example, the information D is determined based on information E, and the information E is determined based on the information C.
13. In this application, "an apparatus A sends the information A to an apparatus B" may be understood as that a destination end of the information A or an intermediate network element on a transmission path to the destination end is the apparatus B, and may include directly or indirectly sending the information to the apparatus B.
14. In this application, "the apparatus B receives the information A from the apparatus A" may be understood as that a source end of the information A or an intermediate network element on a transmission path to the source end is the apparatus A, and may include directly or indirectly receiving the information from the apparatus A. Information may undergo necessary processing, for example, a format change, between the source end and the destination end of information sending. However, the destination end may understand valid information from the source end. Similar descriptions in this application may be understood similarly, and details are not described herein.

First, a communication system to which an embodiment of this application is applicable is described.

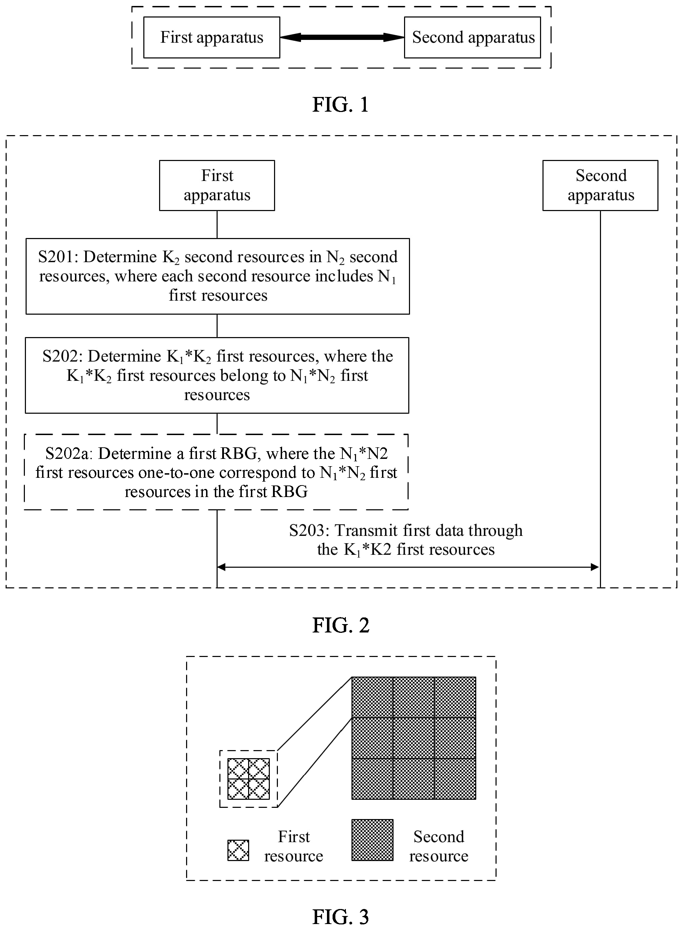

FIG. 1 is a diagram of a communication system to which an embodiment of this application is applicable. As shown in FIG. 1, the communication system includes a first apparatus and a second apparatus. Data transmission exists between the first apparatus and the second apparatus. The first apparatus may be a transmitter, and the second apparatus may be a receiver. Alternatively, the first apparatus may be a receiver, and the second apparatus may be a transmitter. This is not limited herein. For ease of description, the following uses an example in which the first apparatus is a transmitter and the second apparatus is a receiver for description.

In this embodiment of this application, the first apparatus may be a terminal device, and the second apparatus may be a terminal device; or the first apparatus is a terminal device, and the second apparatus is a network device; or the first apparatus is a network device, and the second apparatus is a terminal device; or the first apparatus is a network device, and the second apparatus is a network device. This is not limited herein.

In this embodiment of this application, the terminal device may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus.

In this embodiment of this application, the terminal device may alternatively be a satellite phone, a cellular phone, a smartphone, a wireless data card, a wireless modem, a machinetype communication device, cordless phone, a session initiation protocol (session initiation protocol, SIP) phone, a wireless local loop (wireless local loop, WLL) station, a personal digital assistant (personal digital assistant, PDA), a customer-premises equipment (customer-premises equipment, CPE), a smart point of sale (point of sale, POS) machine, a handheld device having a wireless communication function, a compute device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited.

In this embodiment of this application, the terminal device may alternatively be a device having a communication function in a 6G communication system, and a form, a type, or the like of the terminal device in 6G and another future communication system is not limited.

In this embodiment of this application, a communication apparatus configured to implement a function of the terminal device may be a terminal device, or may be an apparatus that can support the terminal device in implementing the function, for example, a chip system. The apparatus may be mounted in the terminal device or used in combination with the terminal device. In this application, the chip system may include a chip, or may include the chip and another discrete component.

In this embodiment of this application, the network device is a device having a wireless transceiver function, and is configured to communicate with the terminal device. The network device may be a node in a radio access network (radio access network, RAN), or may be referred to as a base station, or may be referred to as a RAN node; or may be an evolved NodeB (evolved NodeB, eNB or eNodeB) in LTE, a base station in a 5G network like a gNodeB (gNB), a base station in a public land mobile network (public land mobile network, PLMN) evolved after 5G, a broadband network task gateway (broadband network gateway, BNG), an aggregation switch, a 3rd generation partnership project (the 3rd generation partnership project, 3GPP) network device, or the like.

The RAN may be configured as a RAN defined in a 3GPP protocol, an open radio access network (open radio access network, O-RAN), a cloud access network (cloud radio access network, C-RAN), or the like. The network device may further include base stations in various forms, for example, a macro base station, a micro base station (also referred to as a small cell), a relay station, a transmitting and receiving point (transmitting and receiving point, TRP), a transmitting point (transmitting point, TP), a mobile switching center, devices that function as a base station in device-to-device (device-to-device, D2D), vehicle-to-everything (vehicle-to-everything, V2X), and machine-to-machine (machine-to-machine, M2M) communication, a network device in a non-terrestrial network (non-terrestrial network, NTN), and the like. This is not specifically limited.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be implemented by both a base band unit (base band unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In different communication systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In this embodiment of this application, the network device may alternatively be a device having a communication function in the 6G communication system, and a form, a type, or the like of the network device in 6G and another future communication system is not limited.

In this embodiment of this application, a communication apparatus configured to implement a function of the network device may be a network device, or may be an apparatus that can support the network device in implementing the function, for example, a chip system. The apparatus may be mounted in the network device or used in combination with the network device. In embodiments of this application, the chip system may include a chip, or may include the chip and another discrete component.

The network device may include a baseband apparatus and a radio frequency apparatus. The baseband apparatus may be implemented by one node, or may be implemented by a plurality of nodes. The radio frequency apparatus may be independently implemented by being disposed remotely from the baseband apparatus, or may be integrated into the baseband apparatus. Alternatively, some functions of the radio frequency apparatus are independently integrated, and some functions of the radio frequency apparatus are integrated into the baseband apparatus. For example, in an LTE communication system, the network device includes a baseband apparatus and a radio frequency apparatus. The radio frequency apparatus may be disposed remotely relative to the baseband apparatus. For example, an RRU is a remote radio unit disposed relative to a BBU.

Communication between the network device and the terminal device complies with a specific protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

The network device may implement functions of protocol layers such as an RRC layer, a PDCP layer, an RLC layer, and a MAC layer by using one node, or may implement the functions of these protocol layers by using a plurality of nodes. For example, in an evolved structure, the network device includes a CU and a DU, and a plurality of DUs are all controlled by one CU. For example, division may be performed for the CU and the DU based on protocol layers of a wireless network. For example, the functions of the PDCP layer and the protocol layers above the PDCP layer are set on the CU, and the functions of the protocol layers below the PDCP layer such as the RLC layer and the MAC layer are set on the DU.

The division at such protocol layers is merely an example. The division may alternatively be performed at other protocol layers such as the RLC layer, so that the functions of the RLC layer and the protocol layers above the RLC layer are set on the CU and the functions of the protocol layers below the RLC layer are set on the DU. Alternatively, the division is performed within a protocol layer. For example, some functions of the RLC layer and the functions of the protocol layers above the RLC layer are set on the CU, and remaining functions of the RLC layer and the functions of the protocol layers below the RLC layer are set on the DU. In addition, division may alternatively be performed in another manner. For example, division may be performed based on latency. A function whose processing time needs to satisfy a latency requirement is set on the DU, and a function whose processing time does not need to satisfy the latency requirement is set on the CU.

In addition, the radio frequency apparatus may be independently integrated, not placed in the DU, or may be integrated in the DU. Alternatively, a part of the radio frequency apparatus may be remotely integrated in the DU. This is not limited herein.

A network architecture and a service scenario that are described in this application are intended to describe the technical solutions in embodiments of this application more clearly, but do not constitute any limitation on the technical solutions provided in this application. A person of ordinary skill in the art may learn that, with evolution of a communication network architecture and emergence of a new service scenario, the technical solutions provided in this application are also applicable to similar technical problems. For example, this application is applicable to a V2X scenario.

In embodiments of this application, N1 may be represented as N₁, N2 may be represented as N₂, K1 may be represented as K₁, K2 may be represented as K₂, L1 may be represented as L₁, L2 may be represented as L₂, Q1 may be represented as Q₁, and Q2 may be represented as Q₂.

The following describes the transmission method and the communication apparatus in embodiments of this application with reference to the accompanying drawings.

FIG. 2 is a schematic interaction flowchart of a transmission method according to an embodiment of this application. As shown in FIG. 2, the method includes the following steps.

S201: A first apparatus determines K₂ second resources in N₂ second resources, where each second resource includes N₁ first resources.

S202: The first apparatus determines K₁*K₂ first resources, where the K₁*K₂ first resources belong to N₁*N₂ first resources.

The N₂ second resources are configured resources used for data transmission. The configuration may be understood as follows: The configuration is performed by the first apparatus or by another apparatus, and the another apparatus sends first configuration signaling to the first apparatus, where the first configuration signaling is used to configure a resource used for data transmission.

For example, when the first apparatus configures the resource used for data transmission, the N₂ second resources are predefined, or the N₂ second resources are determined according to a predefined rule.

For example, the first apparatus obtains the first configuration signaling, where the first configuration signaling is used to configure the resource used for data transmission.

Optionally, that the N₂ second resources are the configured resources used for data transmission may indicate that the N₂ second resources are used to transmit data, and the N₂ second resources are not used for another purpose. For example, the N₂ second resources are not used to transmit a reference signal.

In a possible implementation, the first configuration signaling is used to configure a resource used for data transmission, that is, the first configuration signaling indicates the N₂ second resources.

In a possible implementation, the first configuration signaling is used to configure a first resource block group (resource block group, RBG), the first RBG includes one or more RBGs, and one RBG includes several resource elements (resource elements, REs). The first RBG includes resources used for data transmission, and the N₂ second resources correspond to the resources used for data transmission in the first RBG. For example, the N₂ second resources are a part or all of the resources used for data transmission in the first RBG.

In a possible implementation, the method may further include the following content.

S202a: The first apparatus determines the first RBG, where the N₁*N₂ first resources one-to-one correspond to N₁*N₂ first resources in the first RBG.

For example, the first RBG includes a quantity of resources greater than or equal to a quantity of the N₁*N₂ first resources, and the foregoing N₁*N₂ first resources one-to-one correspond to the N₁*N₂ first resources in the first RBG.

That the first apparatus determines the first RBG may include: The first apparatus autonomously determines the first RBG, or the first apparatus determines the first RBG based on the first configuration signaling. This is not limited herein. For descriptions of the first RBG, refer to the foregoing descriptions. Details are not described again.

One RBG may include at least one resource block (resource block, RB), one RB includes at least one time unit, and one time unit includes at least one resource element (resource element, RE). A long term evolution system is used as an example. One time unit is one orthogonal frequency division multiplexing (orthogonal frequency division multiplexing, OFDM) symbol or one single-carrier frequency division multiple access (single-carrier frequency division multiple access, SC-FDMA) symbol, one RB includes 14 symbols, one symbol includes 12 REs (which may be understood as that one RE on one symbol corresponds to one subcarrier), and one RB includes 168 REs in total.

Optionally, one RBG includes a part of one RB. For example, one RBG includes 1/A RB, and A may be a predefined positive integer. In this case, a quantity of REs included in one time unit changes to 1/A of the quantity of REs included in one time unit of one RB.

In a possible implementation, the N₂ second resources may correspond to resources smaller than an RBG (or a resource granularity of the second resource is smaller than that of an RBG). For example, the N₂ second resources may correspond to some resources of one RBG.

For example, one second resource is one RB; or one second resource is some REs of one RB; or one second resource may be one or more REs. When the second resource is a resource smaller than an RBG, K₂ may be equal to N₂. In this way, the first apparatus may select all second resources for data transmission.

The first RBG is determined and a correspondence between the N₁*N₂ first resources and the N₁*N₂ first resources in the first RBG is determined, so that positions of K₁*K₂ first resources that are actually used for transmitting first data can be determined. For example, the positions that are of the K₁*K₂ first resources for transmitting the first data and that are in all resources included in the system may be determined. In addition, the first RBG may include a resource used for data transmission and a resource used for reference signal transmission, and may further include a resource used for another purpose. Therefore, the N₁*N₂ first resources one-to-one correspond to the N₁*N₂ first resources in the first RBG, and positions of the N₁*N₂ first resources in the first RBG may be determined.

The first RBG may refer to one RBG, or may refer to at least two RBGs. When the first RBG refers to one RBG, the system may be configured with a plurality of RBGs, and the first RBG may be one of the plurality of RBGs. When the first RBG refers to at least two RBGs, the system may be configured with a plurality of RBGs, and the plurality of RBGs may be grouped into a plurality of groups. Each group of RBGs may be referred to as one first RBG. In this case, the first RBG is one group of the plurality of groups of RBGs. For ease of description, the following uses an example in which the first RBG refers to one RBG for description.

In a possible implementation, the first RBG includes a part of one RB, and N₂ may be equal to K₂. When the first RBG includes a part of one RB, the N₁*N₂ first resources may correspond to a part of one RB, and more possibilities of values of N₁ and N₂ may be provided.

In S201, N₂ is an integer greater than or equal to K₂, and K₂ is a positive integer. The first apparatus may determine or select a part or all of second resources from the N₂ second resources. When the first apparatus selects a part of second resources from the N₂ second resources, positions of the part of second resources in the N₂ second resources may be indicated or preconfigured.

In S202, N₁ is an integer greater than or equal to K₁, and K₁ is a positive integer. The first apparatus may determine or select a part or all of first resources from the N₁ first resources. When the first apparatus selects a part of first resources from the N₁ first resources, positions of the part of first resources in the N₁ first resources may be indicated or preconfigured.

In a possible example, the N₂ second resources may be a second resource unit (resource unit, RU) (or a second resource set, where one resource set may include one or more resources, and the resource may be an RE, an RB, or the like), and the second RU includes the N₂ second resources.

In a possible example, the N₁ first resources may be a first RU (or a first resource set), and the first RU includes the N₁ first resources.

In this embodiment of this application, the first resource and the second resource meet a nesting relationship. For example, the N₁ first resources are one second resource, or one second resource includes the N₁ first resources, or one resource in the second RU is the first RU, or one resource in the second RU includes the first RU.

For a relationship between the second resource and the first resource, refer to FIG. 3 to FIG. 5.

FIG. 3 is a diagram of a relationship between a second resource and a first resource according to an embodiment of this application. As shown in FIG. 3, for example, N₂=9, Ni=4, and one second resource includes four first resources.

When the first apparatus selects a part of second resources from the nine second resources, positions of the part of second resources in the nine second resources may be indicated or preconfigured. For example, an index may be configured for each second resource, and the first apparatus determines the part of second resources based on an indicated index (for example, the index may be an index sequence, and the index sequence indicates positions of the K₂ second resources in the N₂ second resources).

When the first apparatus selects a part of first resources from the four first resources, positions of the part of first resources in the four first resources may be indicated or preconfigured. For example, an index may be configured for each first resource, and the first apparatus may determine the part of first resources based on an indicated index (for example, the index may be an index sequence).

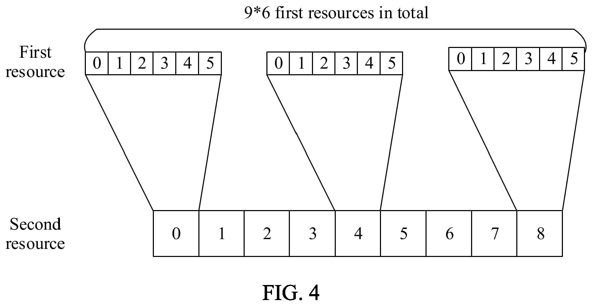

For descriptions of the index of the second resource and the index of the first resource, refer to FIG. 4.

FIG. 4 is a diagram of another relationship between a second resource and a first resource according to an embodiment of this application. As shown in FIG. 4, for example, N₂=9, and N₁=6. A number in a large box indicates the index of the second resource. For example, an index 0 indicates a 1^{st} second resource, an index 1 indicates a 2^{nd} second resource, an index 2 indicates a 3^{rd} second resource, ..., and an index 8 indicates a 9^{th} second resource. A number in a small box indicates the index of the first resource. For example, an index 0 indicates a 1^{st} first resource, an index 1 indicates a 2^{nd} first resource, an index 2 indicates a 3^{rd} first resource, ..., and an index 5 indicates a 6^{th} first resource. When N₂=9 and N₁=6, the nine second resources include 54 first resources in total.

In content shown in FIG. 4, in this embodiment of this application, an example in which indexes of the N₁ first resources included in all the second resources are consistent is used for description. However, an application scenario in which the indexes of the N₁ first resources included in different second resources are different is not limited. For example, indexes of the N₁ first resources included in the 1^{st} second resource are respectively 1 to 6, indexes of the N₁ first resources included in the 2^{nd} second resource are respectively 11 to 16, and indexes of the N₁ first resources included in the 3^{rd} second resource are respectively 21 to 26. For another example, indexes of the N₁ first resources included in the 1^{st} second resource are respectively 1 to 6, indexes of the N₁ first resources included in the 2^{nd} second resource are respectively 7 to 12, and indexes of the N₁ first resources included in the 3^{rd} second resource are respectively 13 to 18.

In a possible implementation, indexes may be respectively configured for the N₁*N₂ first resources. For example, the indexes of the N₁*N₂ first resources are respectively 0 to N₁*N₂-1. One first resource in one second resource uniquely corresponds to one first resource in the N₁*N₂ first resources, that is, an index of one first resource in the N₁*N₂ first resources uniquely corresponds to an index of a second resource and an index of a first resource in the second resource corresponding to the index of the second resource.

For example, a correspondence between an n^{th} (n=0, ..., N₁*N₂-1) first resource in the N₁*N₂ first resources and an index n₁ of a first resource and an index n₂ of a second resource satisfies: $n = {n}_{1} + {n}_{2} * {N}_{1}$

Herein, n₁=0, ..., or Ni-1, and n₂=0, ..., or N₂-1. In other words, an n^{th} first resource in the N₁*N₂ first resources corresponds to an n₁^{th} first resource in an n₂^{th} second resource.

In S202, the first apparatus determines the K₁*K₂ first resources from the N₁*N₂ first resources. A value of K₁*K₂ may be less than or equal to that of N₁*N₂. When K₁*K₂=N₁*N₂, the first apparatus determines or selects all the first resources, that is, the first apparatus selects the N₁*N₂ first resources. When K₁*K₂ is less than N₁*N₂, the first apparatus determines or selects a part of the N₁*N₂ first resources.

In a possible implementation, the first apparatus selects a same quantity of first resources from all the K₂ second resources; or the first apparatus selects different quantities of first resources from all the K₂ second resources.

For example, K₁=3, K₂=3, N₁=6, N₂=9, and the first apparatus determines nine first resources. Quantities of selected first resources in all the K₂=3 second resources may be the same. To be specific, the first apparatus selects three first resources from each second resource (belonging to the K₂=3 second resources). Alternatively, quantities of selected first resources in all the second resources (belonging to the K₂=3 second resources) are different. For example, the first apparatus selects two first resources from a 1^{st} second resource (one second resource in the K₂=3 second resources), selects four first resources from a 2^{nd} second resource (another second resource in the K₂=3 second resources), and selects three first resources from a 3^{rd} second resource (the last second resource in the K₂=3 second resources).

In conclusion, a manner in which the first apparatus determines the K₁*K₂ first resources from the N₁*N₂ first resources is not limited in this embodiment of this application.

In a possible implementation, that the first apparatus determines the K₁*K₂ first resources may include the following content.

The first apparatus determines the K₁ first resources from each second resource in the K₂ second resources.

For example, the first apparatus may select the same quantity of first resources from all the second resources. For example, each second resource includes the N₁ first resources, and the first apparatus determines or selects the K₁ first resources from the N₁ first resources, to finally form the K₁*K₂ first resources. In this way, overheads during resource indication can be reduced. In addition, when each of the plurality of first apparatuses determines respective K₁*K₂ first resources from the same N₁*N₂ first resources, interference between data transmission of the plurality of first apparatuses can be more easily controlled.

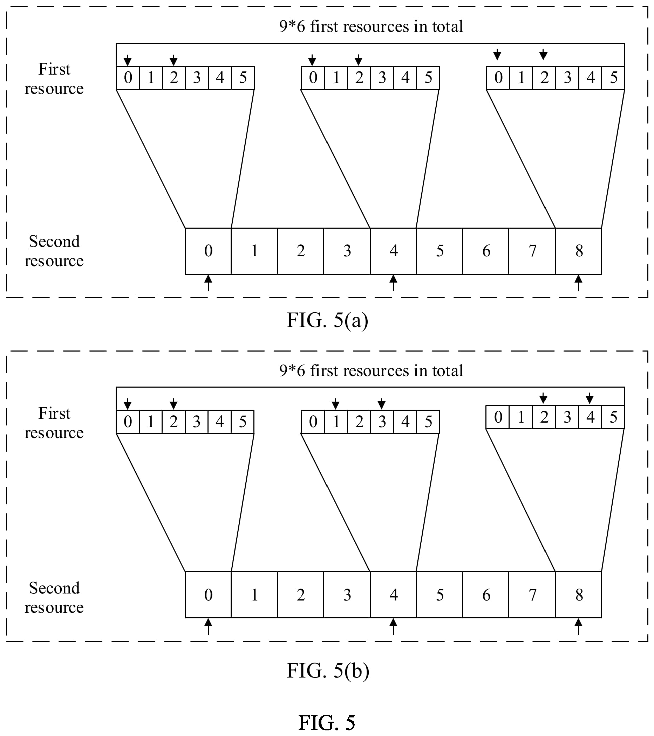

In a possible implementation, positions of the K₁ first resources in the N₁ first resources may be the same or may be different across all the second resources (which are second resources in the K₂ second resources). For details, refer to FIG. 5.

FIG. 5 is a diagram of still another relationship between a second resource and a first resource according to an embodiment of this application. As shown in FIG. 5, N₂=9, K₂=3, N₁=6, and K₁=2. A box corresponding to each arrow is a selected first resource or second resource.

In FIG. 5(a), a 1^{st} box (indicating that the index of the second resource is 0), a 5^{th} box (indicating that the index of the second resource is 4), and a 9^{th} box (indicating that the index of the second resource is 8) in large boxes are represented as selected second resources, and a 1^{st} box (indicating that the index of the first resource is 0) and a 3^{rd} box (indicating that the index of the first resource is 2) in small boxes are represented as selected first resources. Positions of the K₁ first resources in the N₁ first resources are the same across all the second resources (the selected second resources). The positions of the K₁ first resources in the N₁ first resources are the same, so that overheads during resource indication can be effectively reduced.

In FIG. 5(b), a 1^{st} box (indicating that the index of the second resource is 0), a 5^{th} box (indicating that the index of the second resource is 4), and a 9^{th} box (indicating that the index of the second resource is 8) in large boxes are represented as selected second resources. Positions of the K₁ first resources in the N₁ first resources are different across all the second resources (the selected second resources). For example, positions of the K₁ first resources in the 1^{st} large box in the N₁ first resources are respectively {0, 2} (that is, indexes of the first resources are 0 and 2), positions of the K₁ first resources in the 5^{th} large box in the N₁ first resources are respectively {1, 3} (that is, indexes of the first resources are 1 and 3), and positions of the K₁ first resources in the 9^{th} large box in the N₁ first resources are respectively {2, 4} (that is, indexes of the first resources are 2 and 4). The positions of the K₁ first resources in the N₁ first resources are different, so that a quantity of resource combinations can be effectively increased.

When the positions of the K₁ first resources in the N₁ first resources are the same across all the second resources, the K₁ first resources in one second resource are indicated, so that the K₁ first resources in the remaining second resources may be determined. This can reduce overheads during resource indication.

When the positions of the K₁ first resources in the N₁ first resources are different across all the second resources, combinations of the K₁ first resources in different second resources can be increased, so that different devices can select different resources for data transmission. This can reduce a probability that resources selected by different devices overlap, and further reduce interference between data transmission of different devices.

In a possible implementation, the positions of the K₁ first resources in the N₁ first resources across all the second resources (which are second resources in the K₂ second resources) may be determined based on the positions of the K₁ first resources in the N₁ first resources for one of the second resources.

For example, the positions of the K₁ first resources in the N₁ first resources across all the second resources (which are second resources in the K₂ second resources) are obtained based on the positions of the K₁ first resources in the N₁ first resources for a 1^{st} second resource in the K₂ second resources. For example, in FIG. 5(b), it may be determined that the positions of the K₁ first resources in the N₁ first resources for the 1^{st} second resource (that is, the 1^{st} large box) are [0, 2], the positions of the K₁ first resources in the N₁ first resources for the 5^{th} large box may be obtained by adding 1 to [0, 2], and the positions of the K₁ first resources in the N₁ first resources for the 9^{th} large box may be obtained by adding 2 to [0, 2].

In content shown in FIG. 5, the positions of the selected first resources and/or second resources may be indicated. For details, refer to the following descriptions.

In a possible implementation, that the first apparatus determines the K₂ second resources in the N₂ second resources includes:
The first apparatus determines the K₂ second resources from the N₂ second resources based on a second sequence.
The second sequence may be understood as an index sequence. Each element (or sequence element) in the second sequence corresponds to one second resource in the K₂ second resources. The second sequence may indicate the positions of the K₂ second resources in the N₂ second resources.

With reference to content shown in FIG. 5(a) and FIG. 5(b), the second sequence may be [0, 4, 8], that is, a 0^{th} element (a value 0) in the second sequence determines a 0^{th} second resource, a 1^{st} element (a value 4) in the second sequence determines a 4^{th} second resource, and a 2^{nd} element (a value 8) in the second sequence determines an 8^{th} second resource. The first apparatus may determine the K₂ second resources from the N₂ second resources based on the second sequence.

In this embodiment of this application, the second sequence may exist in a bitmap form, where a value 1 in a bitmap may indicate a selected resource, or a value 0 in a bitmap may indicate a selected resource; or may exist in a character string form, where a character string indicates a value of an index of a resource, and the like. This is not limited herein. For example, N₂ bits may be determined based on the bitmap form, and the N₂ bits one-to-one correspond to the N₂ second resources. When a value of a bit in the N₂ bits is 1, it may indicate that a second resource corresponding to the bit is a selected resource.

The second sequence may be a sequence in a second sequence set. For example, a second sequence set may be configured, the second sequence set includes at least one sequence, and each of the at least one sequence is used to determine the corresponding K₂ second resources in the N₂ second resources. Correspondingly, an index of a sequence may be configured for each sequence in the second sequence set, and the index of the sequence is used to determine a corresponding sequence in the second sequence set. One sequence in the second sequence set may be determined in a predefinition or signaling indication manner, and the determined sequence is used as the second sequence. For example, an index of the second sequence in the second sequence set is determined, so that the second sequence can be determined.

Different second sequences are designed, so that different devices can select the K₂ second resources from the N₂ second resources based on respective second sequences, and a probability of interference between data transmission of different devices can be reduced.

In a possible implementation, before the first apparatus determines the K₂ second resources from the N₂ second resources based on the second sequence, the method further includes:
determining the index of the second sequence; and
determining the second sequence from the second sequence set based on the index of the second sequence.

When the second sequence is a sequence in the second sequence set, the first apparatus may determine the second sequence based on the index of the second sequence in the second sequence set, and may select the K₂ second resources from the N₂ second resources based on the determined second sequence.

It should be noted that a quantity of sequences in the second sequence set is related to N₂ and K₂, which is specifically described below.

In a possible implementation, a quantity of same elements in any two sequences in the second sequence set is less than or equal to L₂, the quantity of sequences (or generation of sequences) in the second sequence set is related to L₂, and L₂ is an integer less than or equal to K₂. Details are described below.

L₂ is designed, so that the quantity of sequences in the sequence set is related to L₂, and generation of the sequences in the sequence set is also related to L₂. Different values of the L₂ parameter are selected, so that different devices can select different second sequences. This can help reduce a probability that resources selected by different devices overlap, to reduce interference between data transmission of different devices.

In a possible implementation, the second sequence set belongs to a second sequence set group, and the second sequence set group includes a plurality of sequence sets.

The second sequence set group is designed, the second sequence set group includes a plurality of sequence sets, and different sequence sets may include different quantities of sequences, so that application scenarios with different quantities of devices can be supported. Different devices may select respective second sequences from the plurality of sequence sets. This can reduce a probability that resources selected by different devices overlap, to further reduce interference between data transmission of different devices.

In a possible implementation, that the first apparatus determines the K₁ first resources from each second resource in the K₂ second resources includes:
The first apparatus determines the K₁ first resources from the N₁ first resources based on a first sequence.

The first sequence may be understood as an index sequence. Each element (or sequence element) in the first sequence corresponds to one first resource in the K₁ first resources. The first sequence may indicate the positions of the K₁ first resources in the N₁ first resources.

Different first sequences are designed, so that different devices can select the K₁ first resources from the N₁ first resources based on respective first sequences, and a probability of interference between data transmission of different devices can be reduced.

With reference to the content shown in FIG. 5(a), the first sequence corresponding to each second resource is [0, 2] (a number 0 represents a 1^{st} first resource in the six first resources, and a number 2 represents a 3^{rd} first resource in the six first resources. This is similar in the following, and details are not described again). The first apparatus may determine the K₁ first resources from the N₁ first resources based on the first sequence.

With reference to the content shown in FIG. 5(b), different second resources correspond to different first sequences. For example, the first sequence corresponding to a 1^{st} second resource is [0, 2], the first sequence corresponding to a 2^{nd} second resource is [1, 3], and the first sequence corresponding to a 3^{rd} second resource is [2, 4]. The first apparatus may determine the K₁ first resources from the N₁ first resources based on the first sequence.

When there are a plurality of selected second resources, first sequences corresponding to all the second resources may be the same or may be different. When each second resource corresponds to the same first sequences, the first sequence corresponding to one second resource is indicated, so that the first sequences corresponding to the remaining second resources may be determined. This can reduce overheads during resource indication.

When each second resource corresponds to a different first sequences, there is an association relationship between the first sequences corresponding to different second resources. For example, the first sequence corresponding to the 2^{nd} second resource is determined based on the first sequence corresponding to the 1^{st} first resource. For example, the first sequence corresponding to the 2^{nd} second resource may be obtained by performing an offset based on the first sequence corresponding to the 1^{st} second resource. The offset value may be fixed, or may be related to a position of the 2^{nd} second resource in the K₂ second resources. This is not limited herein.

The first sequence may be a sequence in a first sequence set. For example, a first sequence set may be configured, the first sequence set includes at least one sequence, and each of the at least one sequence is used to determine the corresponding K₁ first resources in the N₁ first resources. Correspondingly, an index of a sequence may be configured for each sequence in the first sequence set, and the index of the sequence is used to determine a corresponding sequence in the first sequence set. One sequence in the first sequence set may be determined in a predefinition or signaling indication manner, and the determined sequence is used as the first sequence. For example, an index of the first sequence in the first sequence set is determined, so that the first sequence can be determined.

**In** a possible implementation, before the first apparatus determines the K₁ first resources from the N₁ first resources based on the first sequence, the method further includes:
determining an index of the first sequence; and
determining the first sequence from the first sequence set based on the index of the first sequence.

When the first sequence is a sequence in the first sequence set, the first apparatus may determine the first sequence based on the index of the first sequence in the first sequence set, and may select the K₁ first resources from the N₁ first resources based on the determined first sequence.

It should be noted that a quantity of sequences in the first sequence set is related to N₁ and K₁, which is specifically described below.

**In** a possible implementation, a quantity of same elements in any two sequences in the first sequence set is less than or equal to L₁, the quantity of sequences in the first sequence set is related to L₁, and L₁ is an integer less than or equal to K₁. Details are described below.

L₁ is designed, so that the quantity of sequences in the sequence set is related to L₁, and generation of the sequences in the sequence set is also related to L₁. Different values of the L₁ parameter are selected, so that different devices can select different first sequences. This can reduce a probability that resources selected by different devices overlap, to reduce interference between data transmission of different devices.

**In a** possible implementation, the first sequence set belongs to a first sequence set group, and the first sequence set group includes a plurality of sequence sets.

The first sequence set group is designed, the first sequence set group includes the plurality of sequence sets, and different sequence sets may include different quantities of sequences, so that application scenarios with different quantities of devices can be supported. Different devices may select respective first sequences from the plurality of sequence sets. This can reduce a probability that resources selected by different devices overlap, to further reduce interference between data transmission of different devices.

For further descriptions of the first sequence and the second sequence, refer to the following content.

**In** this embodiment of this application, one sequence (which is the first sequence or the second sequence) may be defined, and K resources (for example, the K₂ second resources or the K₁ first resources) in N resources (for example, the N₂ second resources or the N₁ first resources) are determined based on the sequence. The determined K resources are used to transmit data (or may be used to transmit a reference signal, which is not limited herein). The sequence can indicate positions of the K resources in the N resources. For example, the sequence is represented as I, I includes K elements, and the K elements one-to-one correspond to the K resources.

For example, a sequence set (which is the first sequence set or the second sequence set) is represented as S, S={S₀, ..., S_{Nseq-1}}, S_{q} is a q^{th} sequence in the sequence set, S_{q} includes K elements, and q=0, ..., N_{seq}-1. N_{seq} is a quantity of sequences included in the sequence set, and N_{seq} is a positive integer. The q^{th} sequence in the sequence set may be determined in a predefinition or signaling indication manner. In this case: $I \left(k\right) = {S}_{q} \left(k\right) , k = 0 , … , K - 1$
I(k) and S_{q}(k) are respectively a k^{th} element of I and a k^{th} element of S_{q}.

The foregoing sequence set may be predefined or generated according to a formula. The method of generating the sequence set according to a formula includes the following content.

### Method #1:

The N resources include K groups of resources, each group of resources includes Q resources, Q=N/K, and Q is an integer.

When the method is used to determine the K₂ second resources from the N₂ second resources, the N₂ resources include K₂ groups of resources (that is, the N₂ second resources include K₂ groups of second resources), and each group includes a same quantity of second resources. When the second sequence set is constructed based on the N₂ second resources, complexity of the method is low, and the method is applicable to different L₂ requirements and various possible values of N₂ and K₂.

When the method is used to determine the K₁ first resources from the N₁ first resources, the N₁ resources include K₁ groups of resources (that is, the N₁ first resources include K₁ groups of first resources), and each group includes a same quantity of first resources. When the second sequence set is constructed based on the N₂ second resources, complexity of the method is low, and the method is applicable to different L₂ requirements and various possible values of N₂ and K₂.

A j^{th} sequence in the sequence set may be represented as: ${S}_{j} \left(k\right) = k ∗ Q + \left({\sum }_{l = 0}^{L} {k}^{l} ∗ {i}_{l}\right) mod Q , {i}_{l} = 0 , … , Q - 1$

Herein, $j = {\sum }_{l = 0}^{L} {\left(Q\right)}^{l} \times {i}_{l}$, the sequence set includes (*Q*)^{*L*+1} sequences, and k=0, ..., K-1.

The j^{th} sequence in the sequence set may alternatively be represented as: ${S}_{j} \left(k\right) = k ∗ Q + \left({\sum }_{l = 0}^{L} {k}^{l} ∗ {i}_{l} + {Δ}_{1}\right) mod Q , {i}_{l} = 0 , … , Q - 1$

Herein, Δ₁ is an offset, Δ₁ is an integer, and Δ₁ may be predefined or indicated based on signaling.

It may be understood that when the method is applied to determining the K₂ second resources from the N₂ second resources, N, Q, and L in the method respectively correspond to N₂, Q₂, and L₂. According to the foregoing formula, in this embodiment of this application, a sequence in the second sequence set can be formed.

It may be understood that when the method is applied to determining the K₁ first resources from the N₁ first resources, N, Q, and L in the method respectively correspond to N₁, Q₁, and L₁. According to the foregoing formula, in this embodiment of this application, a sequence in the first sequence set can be formed.

L may be predefined or indicated based on signaling. A quantity of same elements between any two sequences in the sequence set does not exceed L.

In conclusion, the quantity of sequences in the sequence set is related to N, K, and L.

The following further describes Method #1.

**Table 1**

| Interference configuration | Sequence set |
|---|---|
| Interference configuration 1 | N=K, and L=0 |
| Interference configuration 2 | Q=N/K, K≥1, and L=0 |
| Interference configuration 3 | Q=N/K, K≥2, and L=1 |
| Interference configuration 4 | Q=N/K, K≥2, L=1, and two sequences in a sequence set generated based on the interference configuration 3 are selected for concatenation |
| Interference configuration 5 | Q=N/K, K≥2, L=1, and three sequences in a sequence set generated based on the interference configuration 3 are selected for concatenation. |
| Interference configuration 6 | Q=N/K, K≥3, and L=2 |
| Interference configuration 7 | Q=N/K, K≥4, and L=3 |

As shown in Table 1, sequence sets may be generated based on different interference configurations. Different interference configurations may form different sequence sets. A quantity of sequences in a sequence set and generation of the sequence are all related to a selected interference configuration.

Interference configuration 1: L=0, Q=1, and N=K.

A sequence set 1 (corresponding to the interference configuration 1) includes one sequence, and the sequence is represented as follows: ${S}_{{i}_{0}} \left(k\right) = k ∗ Q + {i}_{0} mod Q , {i}_{0} = 0$

Optionally, an expression of the sequence in the sequence set 1 may alternatively be directly listed as S₀=[0, ..., N-1].

Interference configuration 2: Q=N/K, K≥1, and L=0.

A sequence in a sequence set 2 (corresponding to the interference configuration 2) is represented as follows: ${S}_{{i}_{0}} \left(k\right) = k ∗ Q + {i}_{0} mod Q , {i}_{0} = 0 , 1 , … , Q - 1$

A quantity of same elements between any two sequences in the sequence set 2 is 0, that is, any two sequences are orthogonal to each other. The sequence set 2 includes Q sequences.

For example, N=9, K=3, Q=3, and the sequence set 2 includes three sequences: *S*₀ = [0, 3, 6], *S*₁ = [1, 4, 7], and *S*₂ = [2, 5, 8]. It is easy to understand that *S*₀ = [0, 3, 6] represents a 0^{th} resource, a 3^{rd} resource, and a 6^{th} resource in nine resources (numbered from 0 to 8).

Interference configuration 3: Q=N/K, K≥2, and L=1.

A sequence in a sequence set 3 (corresponding to the interference configuration 3) is represented as follows: ${S}_{{i}_{1} ∗ Q + {i}_{0}} \left(k\right) = k ∗ Q + \left(k∗{i}_{1}+{i}_{0}\right) mod Q , {i}_{0} , {i}_{1} = 0 , 1 , … , Q - 1$
i₀, i₁=0, 1, ..., Q-1 indicates that i₀ and i₁ may independently take all values from 0 to Q-1. There are a total of *Q*² combinations of values of i₀ and i₁.

Interference configuration 4: Q=N/K, K≥2, L=1, and two sequences in the sequence set generated based on the interference configuration 3 are selected for concatenation.

A sequence in a sequence set 4 (corresponding to the interference configuration 4) is obtained by concatenating two sequences in the sequence set 3.

Optionally, any two elements in any sequence in the sequence set 4 are different. To be specific, when two sequences are selected from the sequence set 3 for concatenation to obtain a sequence, if the two sequences include a same element, the concatenated sequence (belonging to the sequence set 4) includes one such element.

In a possible implementation, a *k*'^{th} sequence in the sequence set 4 is obtained by concatenating a 2*k*'^{th} sequence and a 2*k'* + 1^{th} sequence in the sequence set 3. $k ′ = 0 , … , \left⌊\frac{{Q}^{2}}{2}\right⌋ - 1$, and the sequence set 4 includes $\left⌊\frac{{Q}^{2}}{2}\right⌋$ sequences. └ ┘ indicates rounding down.

Interference configuration 5: Q=N/K, K≥2, L=1, and three sequences in the sequence set generated based on the interference configuration 3 are selected for concatenation.

A sequence in a sequence set 5 (corresponding to the interference configuration 5) is obtained by concatenating three sequences in the sequence set 3.

Optionally, any two elements in any sequence in the sequence set 5 are different. To be specific, when three sequences are selected from the sequence set 3 for concatenation to obtain a sequence in the sequence set 5, if the three sequences include a same element, the concatenated sequence includes only one such element.

In a possible implementation, a *k'*^{th} sequence in the sequence set 5 is obtained by concatenating a 3*k*'^{th} sequence, a 3*k'* + 1^{th} sequence, and a 3k' + 2^{th} sequence in the sequence set 3. $k ′ = 0 , … , \left⌊\frac{{Q}^{2}}{3}\right⌋ - 1$, and the sequence set 5 includes $\left⌊\frac{{Q}^{2}}{3}\right⌋$ sequences.

Interference configuration 6: Q=N/K, K≥3, and L=2.

A sequence in a sequence set 6 (corresponding to the interference configuration 6) is represented as follows: ${S}_{{i}_{2} ∗ {Q}^{2} + {i}_{1} ∗ Q + {i}_{0}} \left(k\right) = k ∗ Q + \left({k}^{2}∗{i}_{2}+k∗{i}_{1}+{i}_{0}\right) mod Q , {i}_{2} , {i}_{1} , {i}_{0} = 0 , 1 , … , Q - 1$

Interference configuration 7: Q=N/K, K≥4, and L=3.

A sequence in a sequence set 7 (corresponding to the interference configuration 7) is represented as follows: $\begin{matrix}{S}_{{i}_{3} ∗ {Q}^{3} + {i}_{2 ∗} {Q}^{2} + {i}_{1} ∗ Q + {i}_{0}} \left(k\right) = k ∗ Q + \left({k}^{3}∗{i}_{3}+{k}^{2}∗{i}_{2}+k∗{i}_{1}+{i}_{0}\right) mod Q , {i}_{0} , {i}_{1} , {i}_{2} , {i}_{3} \\ = 0 , 1 , … , Q - 1\end{matrix}$

It may be understood that when L>0, the plurality of sequences in the sequence set are non-orthogonal to each other.

It may be understood that, for given Q and L-1, a corresponding sequence set is a subset of a sequence set corresponding to L. Specifically, the sequence set corresponding to L-1 is a set including first Q^{L} sequences in the sequence set corresponding to L.

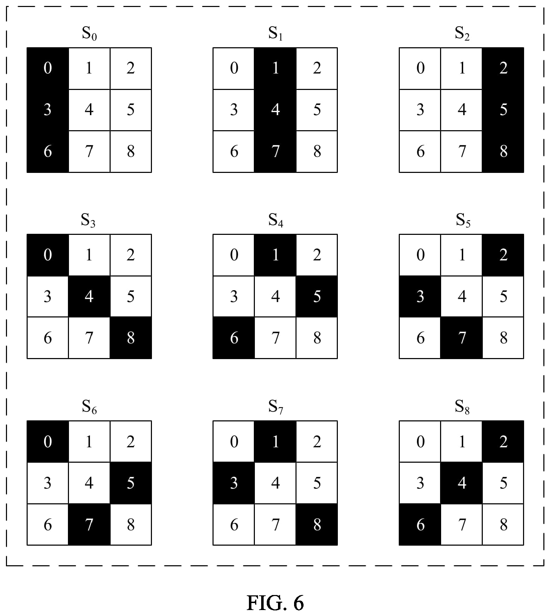

The interference configuration 3 is used as an example, N=9, K=3, Q=3, L=1, and the sequence set 3 includes nine sequences. Refer to FIG. 6.

FIG. 6 is a diagram of a relationship between different sequences in a sequence set according to an embodiment of this application. As shown in FIG. 6, S₀=[0, 3, 6], S₁=[1, 4, 7], S₂=[2, 5, 8], S₃=[0, 4, 8], S₄=[1, 5, 6], S₅=[2, 3, 7], S₆=[0, 5, 7], S₇=[1, 3, 8], and Ss=[2, 4, 6]. When there is a same element between any two sequences in S₀ to S₈, a quantity of the same elements is less than or equal to 1.

It should be noted that content shown in Table 1 is merely used as an example. During application, some or all interference configurations may be selected.

In this embodiment of this application, a value of N may be predefined or indicated based on signaling. For example, the value of N may be one of 6, 9, 10, 15, 20, and 21.

Optionally, N and K correspond to each other, and may be predefined or indicated based on signaling.

For example, possible values of N and K are shown in Table 2.

**Table 2**

| *N* | *K* |
|---|---|
| 5 | 1 |
| 6 | 2 |
| 9 | 3 |
| 10 | 2 |
| 15 | 3 |
| 20 | 4 |
| 21 | 3 |
| 25 | 5 |
| 28 | 4 |
| 33 | 3 |
| 35 | 5 |
| 42 | 6 |
| 49 | 7 |

It can be learned from Table 2 that the values of N and K satisfy that N/K is an integer. The possible values of N and K may be some or all (that is, some or all rows) in Table 2, and the values of N and K in Table 2 may be indicated based on signaling.

Optionally, Q is a composite number, and the values of N and K may be N=12 and K=3, or N=16 and K=4.

Optionally, the value of Q is an integer, and the values of N and K may be other integers, and may be predefined or indicated based on signaling. Method #2:

The N resources include K groups of resources, and each group may include a different quantity of resources. A j^{th} group of resources in the K groups of resources includes Pⱼ resources, where $N = {\sum }_{j = 0}^{K - 1} {P}_{j}$, j=0, ..., K-1, and Pⱼ is an integer.

When the method is used to determine the K₂ second resources from the N₂ second resources, the N₂ resources include K₂ groups of resources (that is, the N₂ second resources include K₂ groups of second resources), and each group may include a different quantity of second resources. A j^{th} group of resources in the K₂ groups of resources includes P_{2, j} second resources, where ${N}_{2} = {\sum }_{j = 0}^{{K}_{2} - 1} {P}_{2 , j}$*,* j=0, ..., K₂-1, and P_{2, j} is a positive integer.

When the N₂ second resources include the K₂ groups of second resources, and each group of second resources includes a different quantity of second resources, when the second sequence set is constructed based on the N₂ second resources, more quantities and types of sequences may be generated, and more possible values of N₂ and K₂ may be provided.

When the method is used to determine the K₁ first resources from the N₁ first resources, the N₁ resources include K₁ groups of resources (that is, the N₁ first resources include K₁ groups of first resources), and each group may include a different quantity of first resources. A j^{th} group of resources in the K₁ groups of resources includes P_{1, j} first resources, where $N 1 = {\sum }_{j = 0}^{{K}_{1} - 1} {P}_{1 , j}$*,* j=0, ..., K₁-1, and P_{2, j} is a positive integer.

When the N₁ second resources include the K₁ groups of first resources, and each group of first resources includes a different quantity of first resources, when the second sequence set is constructed based on the N₁ first resources, more quantities and types of sequences may be generated, and more possible values of N₁ and K₁ may be provided.

In an example, P₀, P₁, ..., and P_{K-1} are determined, and values of P₀, P₁, ..., and P_{K-1} may be different or the same. The sequence set may be determined based on P₀, P₁, ..., and P_{K-1}.

Specifically, when L=0, the sequence in the sequence set is represented as follows: ${S}_{{i}_{0}} \left(k\right) = {\sum }_{p = - 1}^{k - 1} {P}_{p} + {i}_{0} mod {P}_{0} , {i}_{0} = 0 , … , min \left({P}_{0},…,{P}_{K - 1}\right) - 1$ or ${S}_{{i}_{0}} \left(k\right) = {\sum }_{p = - 1}^{k - 1} {P}_{p} + \left({i}_{0}+{Δ}_{2}\right) mod {P}_{0} , {i}_{0} = 0 , … , min \left({P}_{0},…,{P}_{K - 1}\right) - 1$
min(P₀, P₁, ..., P_{K-1}) represents a minimum value in P₀, ..., and P_{K-1}. Δ₂ is an offset, Δ₂ is an integer, and Δ₂ may be predefined or indicated based on signaling.

A sequence including P₀, P₁, ..., and P_{K-1} may be referred to as a parameter sequence P_{seq}, and P_{seq}=[P₀, P₁, ..., P_{K-1}].

When the method is used to determine the K₂ second resources from the N₂ second resources, P₀, P₁, ..., and P_{K-1} correspond to P_{2, 0}, P_{2, 1}, ..., and P_{2, K2-1}, a parameter sequence including P_{2, 0}, P_{2, 1}, ..., and P_{2, K2-1} may be represented as P_{2, seq}, and P_{2, seq}=[P_{2, 0}, P_{2, 1}, ..., P_{2, K2-1}].

When the method is used to determine the K₁ first resources from the N₁ first resources, P₀, P₁, ..., and P_{K-1} correspond to P_{1, 0}, P_{1, 1}, ..., and P_{1, K1-1}, a parameter sequence including P_{1, 0}, P_{1, 1}, ..., and P_{1, K1-1} may be represented as P_{1, seq}, and P_{1, seq}=[P_{1, 0}, P_{1, 1}, ..., P_{1, K1-1}].

In this case, a quantity of same elements between any two sequences in the sequence set is 0, that is, any two sequences are orthogonal to each other.

For example, N=9, K=3, P_{seq}=[3, 4, 5], and the sequence set includes three sequences, that is, S₀=[0, 3, 7], S₁=[1, 4, 8], and S₂=[2, 5, 9].

Specifically, when L is a positive integer, 1≤L≤K-1, and the sequence in the sequence set is represented as follows: ${S}_{j} \left(k\right) = {\sum }_{p = - 1}^{k - 1} {P}_{p} + \left({\sum }_{l = 0}^{L} {k}^{l} ∗ {i}_{l}\right) mod {P}_{k}$ or ${S}_{j} \left(k\right) = {\sum }_{p = - 1}^{k - 1} {P}_{p} + \left({\sum }_{l = 0}^{L} {k}^{l} ∗ {i}_{l} + {Δ}_{3}\right) mod {P}_{k}$
*iₗ* = 0, ... , *Pₗ* - 1, *l* = 0, ... , *L*, $j = {i}_{0} + {\sum }_{w = 1}^{L} \left({i}_{w}∗{\prod }_{p = 0}^{w - 1} {P}_{p}\right)$ and *P*₋₁ = 0 . The sequence set includes ${\prod }_{p = 0}^{L} {P}_{p}$ sequences, that is, ${N}_{seq} = {\prod }_{p = 0}^{L} {P}_{p}$*. mod* represents a modulo operation. Δ₃ is an offset, Δ₃ is an integer, and Δ₃ may be predefined or indicated based on signaling.

Optionally, P₀, P₁, ..., and P_{K-1} may be arranged in ascending order, and it is satisfied that P₀≤P₁≤...≤P_{K-1}.

For example, when L=1, Formula (10-a) may be represented as follows: ${S}_{j} \left(k\right) = {\sum }_{p = - 1}^{k - 1} {P}_{p} + \left(k∗{i}_{1}+{i}_{0}\right) mod {P}_{k}$
*i*₀ = 0, ..., *P*₀ - 1, *i*₁ = 0, ... , *P*₁ - 1,j = *i*₀ *+ i*_{1 *} *P*₀ and *P*₋₁ = 0. The sequence set includes P₀*P₁ sequences.

For example, N=9, K=3, P=3, L=1, P_{seq}=[3, 4, 5], and the sequence set includes 12 sequences: S₀=[0, 3, 7], S₁=[1, 4, 8], S₂=[2, 5, 9], S₃=[0, 4, 9], S₄=[1, 5, 10], S₅=[2, 6, 11], S₆=[0, 5, 11], S₇=[1, 6, 7], S₈=[2, 3, 8], S₉=[0, 6, 8], S₁₀=[1, 3, 9] and S₁₁=[2, 4, 10]. A quantity of same elements in any two sequences does not exceed 1. In other words, there is at most one same resource between three resources corresponding to any sequence and three resources corresponding to another sequence.

For example, when L=2, Formula (10) may be represented as follows: ${S}_{j} \left(k\right) = {\sum }_{p = - 1}^{k - 1} {P}_{p} + \left({k}^{2}∗{i}_{2}+k∗{i}_{1}+{i}_{0}\right) mod {P}_{k}$
*i*₀ = 0, ... , *P*₀ - 1, *i*₁ = 0, ..., *P*₁ - 1, *i*₂ = 0, ... , *P*₂ - 1, *j* = *i*₀ + *i*_{1 *} *P*₀ + *i*_{2 *} *P*_{1 *} *P*₀ and *P*₋₁ = 0. The sequence set includes P₀*P₁*P₂ sequences.

Optionally, N and P_{seq} correspond to each other, and may be predefined or indicated based on signaling.

For example, when K=3, possible values of N and P_{seq} are shown in Table 3.

**Table 3**

| N | P_{seq} |
|---|---|
| 8 | [2, 2, 4], [2, 3, 3] |
| 9 | [2, 2, 5], [3, 2, 4], [3, 3, 3] |
| 10 | [2, 2, 6], [3, 2, 5], [4, 2, 4] |
| 11 | [2, 2, 7], [2, 3, 6], [2, 4, 5], [3, 2, 6] |
| 12 | [2, 2, 8], [2, 3, 7], [2, 5, 5], [3, 2, 7], [3, 3, 6], [3, 4, 5], [4, 2, 6] |
| 13 | [2, 2, 9], [2, 3, 8], [3, 2, 8], [3, 3, 7], [3, 5, 5], [4, 2, 7], [4, 3, 6], [5, 2, 6] |
| 14 | [2, 3, 9], [2, 4, 8], [2, 5, 7], [3, 2, 9], [3, 3, 8], [4, 2, 8], [4, 3, 7], [4, 5, 5], [5, 2, 7], [5, 3, 6], [6, 2, 6] |
| 15 | [2, 4, 9], [2, 6, 7], [3, 3, 9], [3, 4, 8], [3, 5, 7], [4, 2, 9], [4, 3, 8], [5, 2, 8], [5, 3, 7], [5, 5,5], [6, 3, 6] |
| 16 | [2, 7, 7], [3, 4, 9], [3, 6, 7], [4, 3, 9], [4, 4, 8], [5, 2, 9], [6, 2, 8] |
| 17 | [2, 6, 9], [3, 7, 7], [4, 4, 9], [4, 6, 7], [5, 3, 9], [5, 4, 8], [6, 2, 9], [7, 2, 8] |
| 18 | [2, 7, 9], [3, 6, 9], [4, 7, 7], [5, 4, 9], [5, 6, 7], [6, 3, 9], [6, 4, 8], [7, 2, 9], [8, 2, 8] |
| 19 | [2, 8, 9], [3, 7, 9], [5, 7, 7], [6, 4, 9], [7, 3, 9], [7, 4, 8] |
| 20 | [2, 9, 9], [3, 8, 9], [4, 7, 9], [6, 7, 7], [7, 4, 9], [8, 3, 9], [8, 4, 8] |
| 21 | [3, 9, 9], [4, 8, 9], [5, 7, 9], [7, 7, 7], [9, 3, 9] |
| 22 | [4, 9, 9], [5, 8, 9] |
| 23 | [5, 9, 9], [6, 8, 9] |
| 24 | [6, 9, 9], [7, 8, 9] |
| 25 | [7, 9, 9] |
| 26 | [8, 9, 9] |
| 27 | [9, 9, 9] |

As shown in Table 3, when the value of N changes, the value of P_{seq} may change. For example, when N=8, the value of P_{seq} may be any one of [2, 2, 4] and [2, 3, 3]; or when N=9, the value of P_{seq} may be any one of [2, 2, 5], [3, 2, 4], and [3, 3, 3].

For example, when K=4, possible values of N and P_{seq} are shown in Table 4.

**Table 4**

| N | P_{seq} |
|---|---|
| 18 | [3, 3, 3, 9], [3, 5, 5, 5] |
| 19 | [4, 5, 5, 5] |
| 20 | [5, 5, 5, 5] |
| 21 | [3, 3, 6, 9], [3, 3, 7, 8] |
| 22 | [3, 3, 7, 9], [3, 3, 8, 8], [3, 4, 8, 7], [3, 5, 7, 7], [4, 3, 6, 9], [4, 3, 7, 8] |
| 23 | [3, 3, 8, 9], [3, 3, 9, 8], [3, 4, 9, 7], [3, 5, 7, 8], [4, 3, 8, 8], [4, 4, 8, 7], [5, 3, 6, 9], [5, 3, 7, 8] |
| 24 | [3, 3, 9, 9], [3, 7, 7, 7], [4, 3, 8, 9], [4, 3, 9, 8], [4, 4, 9, 7], [5, 4, 8, 7], [6, 3, 6, 9] |
| 25 | [3, 7, 7, 8], [4, 3, 9, 9], [4, 7, 7, 7], [5, 3, 9, 8], [5, 4, 9, 7] |
| 26 | [4, 7, 7, 8], [5, 3, 9, 9], [5, 7, 7, 7] |
| 27 | [3, 7, 9, 8], [6, 3, 9, 9], [6, 7, 7, 7] |
| 28 | [3, 8, 9, 8], [4, 7, 9, 8], [7, 3, 9, 9], [7, 7, 7, 7] |
| 29 | [4, 8, 9, 8], [8, 3, 9, 9] |
| 30 | [9, 3, 9, 9] |

As shown in Table 4, when the value of N changes, the value of P_{seq} may change. For example, when N=18, the value of P_{seq} may be any one of [3, 3, 3, 9] and [3, 5, 5, 5]; or when N=19, the value of P_{seq} may be [4, 5, 5, 5].

In conclusion, the first sequence set and the second sequence set may be generated based on the foregoing method. For example, the first sequence set is generated based on either of Method #1 and Method #2, and the second sequence set is generated based on either of Method #1 and Method #2.

When the first sequence set is generated based on either of Method #1 and Method #2, the first sequence set may be represented as *S*¹, ${S}^{1} = \left\{{S}_{0}^{1},…,{S}_{{N}_{seq}^{1} - 1}^{1}\right\} , {S}_{q}^{1}$ is a *q*^{th} sequence in the first sequence set, and $q = 0 , … , {N}_{seq}^{1} - 1$*.* ${N}_{seq}^{1}$ is a quantity of sequences included in the first sequence set, and ${N}_{seq}^{1}$ is a positive integer. When the second sequence set is generated based on either of Method #1 and Method #2, the second sequence set may be represented as *S*², ${S}^{2} = \left\{{S}_{0}^{2},…,{S}_{{N}_{seq}^{2} - 1}^{2}\right\} , {S}_{q}^{2}$ is a *q*^{th} sequence in the second sequence set, and $q = 0 , … , {N}_{seq}^{2} - 1$. ${N}_{seq}^{2}$ is a quantity of sequences included in the second sequence set, and ${N}_{seq}^{2}$ is a positive integer.

When one sequence is separately selected from the first sequence set and the second sequence set, ${N}_{seq}^{1} \times {N}_{seq}^{2}$ combinations may be obtained. K₁*K₂ first resources determined based on different combinations are different. Each combination may correspond to one device, and therefore, ${N}_{seq}^{1} \times {N}_{seq}^{2}$ devices may be supported.

Interference configurations are selected, so that interference between data sent based on different combinations of the ${N}_{seq}^{1} \times {N}_{seq}^{2}$ combinations may be controlled.

For example, the first sequence set is generated by using the interference configuration 3, where N₁=9, Ki=3, Q₁=3, L₁=1, and the first sequence set includes nine sequences; and the second sequence set is generated by using the interference configuration 3, where N₂=15, K₂=3, Q₂=5, L₂=1, and the second sequence set includes 25 sequences, and supports a total of 225 devices.

In this embodiment of this application, when both the first sequence set and the second sequence set are generated based on Method #1, for values of N₁, N₂, K₁, and K₂, refer to Table 5 to Table 7.

**Table 5**

| N₁ | K₁ | N₂ | K₂ |
|---|---|---|---|
| 9 | 3 | 15 | 3 |
| 10 | 2 | 15 | 3 |
| 6 | 2 | 25 | 5 |
| 3 | 1 | 49 | 7 |
| 9 | 3 | 16 | 4 |
| 5 | 1 | 25 | 5 |
| 3 | 1 | 42 | 6 |
| 4 | 2 | 33 | 3 |
| 6 | 2 | 20 | 4 |
| 6 | 2 | 21 | 3 |
| 5 | 1 | 21 | 3 |

As shown in Table 5, a value of N₁*N₂ is less than a quantity of REs included in one RB. One RB includes 168 REs. For different values of N₁, N₂, K₁, and K₂, refer to content shown in Table 5. Details are not described again.

**Table 6**

| N₁ | K₁ | N₂ | K₂ |
|---|---|---|---|
| 15 | 3 | 20 | 4 |
| 12 | 3 | 25 | 5 |
| 4 | 1 | 78 | 6 |
| 2 | 2 | 78 | 6 |
| 14 | 2 | 20 | 4 |
| 10 | 2 | 25 | 5 |
| 9 | 3 | 28 | 4 |
| 9 | 3 | 25 | 5 |
| 15 | 3 | 15 | 3 |

As shown in Table 6, a value of N₁*N₂ is less than a quantity of REs included in two RBs. One RB includes 168 REs, and two RBs include 336 REs. For different values of N₁, N₂, K₁, and K₂, refer to content shown in Table 6. Details are not described again.

**Table 7**

| N₁ | K₁ | N₂ | K₂ |
|---|---|---|---|
| 9 | 3 | 52 | 4 |
| 9 | 3 | 49 | 7 |
| 20 | 4 | 21 | 3 |
| 10 | 2 | 42 | 6 |
| 9 | 3 | 44 | 4 |
| 15 | 3 | 25 | 5 |
| 14 | 2 | 25 | 5 |
| 10 | 2 | 35 | 5 |

As shown in Table 7, a value of N₁*N₂ is less than a quantity of REs included in three RBs. One RB includes 168 REs, and three RBs include 504 REs. For different values of N₁, N₂, K₁, and K₂, refer to content shown in Table 7. Details are not described again.

When both the first sequence set and the second sequence set are generated based on Method #2, for values of N₁, N₂, P_{1, seq}, and P_{2, seq}, refer to Table 8 and Table 9.

**Table 8**

| N₁ | P_{1, seq} | N₂ | P_{2, seq} |
|---|---|---|---|
| 8 | [2, 3, 3] | 19 | [5, 7, 7] |
| 9 | [3, 3, 3] | 17 | [4, 6, 7] |
| 10 | [4, 2, 4] | 15 | [5, 5, 5] |
| 12 | [3, 4, 5] | 13 | [3, 5, 5] |
| 12 | [3, 4, 5] | 12 | [3, 4, 5] |
| 9 | [3, 3, 3] | 16 | [3, 6, 7] |
| 11 | [2, 4, 5] | 13 | [3, 5, 5] |
| 11 | [2, 4, 5] | 12 | [3, 4, 5] |
| 9 | [3, 3, 3] | 14 | [4, 5, 5] |
| 6 | [3, 3] | 22 | [5, 8, 9] |
| 6 | [3, 3] | 20 | [6, 7, 7] |
| 8 | [2, 3, 3] | 15 | [5, 5, 5] |
| 10 | [4, 2, 4] | 12 | [3, 4, 5] |

As shown in Table 8, a value of N₁*N₂ is less than a quantity of REs included in one RB. One RB includes 168 REs. For values of N₁, N₂, P_{1, seq}, and P_{2, seq}, refer to content shown in Table 8. Details are not described again.

**Table 9**

| N₁ | P_{1, seq} | N₂ | P_{2, seq} |
|---|---|---|---|
| 13 | [3, 5, 5] | 24 | [7, 8, 9] |
| 12 | [3, 4, 5] | 26 | [8, 9, 9] |
| 12 | [3, 4, 5] | 24 | [7, 8, 9] |
| 9 | [3, 3, 3] | 32 | [10, 11, 11] |
| 11 | [2, 4, 5] | 24 | [7, 8, 9] |
| 12 | [3, 4, 5] | 22 | [5, 8, 9] |
| 10 | [4, 2, 4] | 24 | [7, 8, 9] |
| 12 | [3, 4, 5] | 20 | [6, 7, 7] |
| 15 | [5, 5, 5] | 16 | [3, 6, 7] |

As shown in Table 9, a value of N₁*N₂ is less than a quantity of REs included in two RBs. One RB includes 168 REs, and two RBs include 336 REs. For values of N₁, N₂, P_{1, seq}, and P_{2, seq}, refer to content shown in Table 9. Details are not described again.

When both the first sequence set and the second sequence set are generated based on Method #1, values of N₁, N₂, K₁, and K₂ are all related to a quantity of REs used for data transmission in the first RBG. For details, refer to Table 10 to Table 14.

**Table 10**

| Quantity of REs used for data transmission in the first RBG | N₁ | K₁ | N₂ | K₂ |
|---|---|---|---|---|
| 156 | 9 | 3 | 15 | 3 |
| | 10 | 2 | 15 | 3 |
| | 6 | 2 | 25 | 5 |
| | 3 | 1 | 49 | 7 |
| 144 | 9 | 3 | 15 | 3 |
| | 9 | 3 | 16 | 4 |
| | 5 | 1 | 25 | 5 |
| | 3 | 1 | 42 | 6 |
| 132 | 4 | 2 | 33 | 3 |
| | 6 | 2 | 20 | 4 |
| | 6 | 2 | 21 | 3 |
| 120 | 6 | 2 | 20 | 4 |
| | 5 | 1 | 21 | 3 |

As shown in Table 10, one first RBG includes one RB, one RB includes 14 symbols, and one symbol includes 12 REs, and therefore, one RB includes 168 REs. When 10, 11, 12, or 13 symbols are used to transmit data, a quantity of REs used for data transmission in one RB is 120, 132, 144, or 156 respectively. Therefore, the quantity of REs used for data transmission in the first RBG is 120, 132, 144, or 156.

When the quantity of REs used for data transmission in the first RBG is 156, values of N₁, N₂, K₂, and K₁ may be shown in Table 10.

When the quantity of REs used for data transmission in the first RBG is 144, values of N₁, N₂, K₂, and K₁ may be shown in Table 10.

When the quantity of REs used for data transmission in the first RBG is 132, values of N₁, N₂, K₂, and K₁ may be shown in Table 10.

When the quantity of REs used for data transmission in the first RBG is 120, values of N₁, N₂, K₂, and K₁ may be shown in Table 10.

It should be noted that, because there are a plurality of combinations of the values of N₁, N₂, K₂, and K₁, for example, when the quantity of REs used for data transmission in the first RBG is 156, there are a plurality of combinations of corresponding values of N₁, N₂, K₂, and K₁. In a specific application, any one of the combinations may be selected or indicated. For example, a combination of the values of N₁, N₂, K₂, and K₁ is selected or indicated as 9, 3, 15, and 1; or a combination of the values of N₁, N₂, K₂, and K₁ is selected or indicated as 6, 2, 25, and 5.

**Table 11**

| Quantity of REs used for data transmission in the first RBG | N₁ | K₁ | N₂ | K₂ |
|---|---|---|---|---|
| 312 | 15 | 3 | 20 | 4 |
| | 12 | 3 | 25 | 5 |
| | 4 | 1 | 78 | 6 |
| | 2 | 2 | 78 | 6 |
| 288 | 14 | 2 | 20 | 4 |
| | 10 | 2 | 25 | 5 |
| 264 | 10 | 2 | 25 | 5 |
| | 9 | 3 | 28 | 4 |
| 240 | 9 | 3 | 25 | 5 |
| | 15 | 3 | 15 | 3 |

As shown in Table 11, one first RBG includes two RBs, one RB includes 14 symbols, and one symbol includes 12 REs, and therefore, one RB includes 168 REs. When 10, 11, 12, or 13 symbols are used to transmit data, a quantity of REs used for data transmission in one RB is 120, 132, 144, or 156 respectively. Therefore, the quantity of REs used for data transmission in the first RBG is 240, 264, 288, or 312.

When the quantity of REs used for data transmission in the first RBG is 312, values of N₁, N₂, K₂, and K₁ may be shown in Table 11.

When the quantity of REs used for data transmission in the first RBG is 288, values of N₁, N₂, K₂, and K₁ may be shown in Table 11.

When the quantity of REs used for data transmission in the first RBG is 264, values of N₁, N₂, K₂, and K₁ may be shown in Table 11.

When the quantity of REs used for data transmission in the first RBG is 240, values of N₁, N₂, K₂, and K₁ may be shown in Table 11.

**Table 12**

| Quantity of REs used for data transmission in the first RBG | N₁ | K₁ | N₂ | K₂ |
|---|---|---|---|---|
| 468 | 9 | 3 | 52 | 4 |
| | 9 | 3 | 49 | 7 |
| 432 | 20 | 4 | 21 | 3 |
| | 10 | 2 | 42 | 6 |
| 396 | 9 | 3 | 44 | 4 |
| | 15 | 3 | 25 | 5 |
| 360 | 14 | 2 | 25 | 5 |
| | 10 | 2 | 35 | 5 |

As shown in Table 12, one first RBG includes three RBs, one RB includes 14 symbols, and one symbol includes 12 REs, and therefore, one RB includes 168 REs. When 10, 11, 12, or 13 symbols are used to transmit data, a quantity of REs used for data transmission in one RB is 120, 132, 144, or 156 respectively. Therefore, the quantity of REs used for data transmission in the first RBG is 360, 396, 432, or 468.

When the quantity of REs used for data transmission in the first RBG is 468, values of N₁, N₂, K₂, and K₁ may be shown in Table 12.

When the quantity of REs used for data transmission in the first RBG is 432, values of N₁, N₂, K₂, and K₁ may be shown in Table 12.

When the quantity of REs used for data transmission in the first RBG is 396, values of N₁, N₂, K₂, and K₁ may be shown in Table 12.

When the quantity of REs used for data transmission in the first RBG is 360, values of N₁, N₂, K₂, and K₁ may be shown in Table 12.

When both the first sequence set and the second sequence set are generated based on Method #2, values of N₁, N₂, P_{1, seq}, and P_{2, seq} are all related to the quantity of REs used for data transmission in the first RBG. For details, refer to Table 13 and Table 14.

**Table 13**

| Quantity of REs used for data transmission in the first RBG | N₁ | P_{1, seq} | N₂ | P_{2, seq} |
|---|---|---|---|---|
| 156 | 8 | [2, 3, 3] | 19 | [5, 7, 7] |
| | 9 | [3, 3, 3] | 17 | [4, 6, 7] |
| | 10 | [4, 2, 4] | 15 | [5, 5, 5] |
| | 12 | [3, 4, 5] | 13 | [3, 5, 5] |
| 144 | 12 | [3, 4, 5] | 12 | [3, 4, 5] |
| | 9 | [3, 3, 3] | 16 | [3, 6, 7] |
| | 11 | [2, 4, 5] | 13 | [3, 5, 5] |
| 132 | 11 | [2, 4, 5] | 12 | [3, 4, 5] |
| | 9 | [3, 3, 3] | 14 | [4, 5, 5] |
| | 6 | [3, 3] | 22 | [5, 8, 9] |
| 120 | 6 | [3, 3] | 20 | [6, 7, 7] |
| | 8 | [2, 3, 3] | 15 | [5, 5, 5] |
| | 10 | [4, 2, 4] | 12 | [3, 4, 5] |

As shown in Table 13, one first RBG includes one RB, one RB includes 14 symbols, and one symbol includes 12 REs, and therefore, one RB includes 168 REs. When 10, 11, 12, or 13 symbols are used to transmit data, a quantity of REs used for data transmission in one RB is 120, 132, 144, or 156 respectively. Therefore, the quantity of REs used for data transmission in the first RBG is 120, 132, 144, or 156.

When the quantity of REs used for data transmission in the first RBG is 156, values of N₁, N₂, P_{1, seq}, and P_{2, seq} may be shown in Table 13.

When the quantity of REs used for data transmission in the first RBG is 144, values of N₁, N₂, P_{1, seq}, and P_{2, seq} may be shown in Table 13.

When the quantity of REs used for data transmission in the first RBG is 132, values of N₁, N₂, P_{1, seq}, and P_{2, seq} may be shown in Table 13.

When the quantity of REs used for data transmission in the first RBG is 120, values of N₁, N₂, P_{1, seq}, and P_{2, seq} may be shown in Table 13.

**Table 14**

| Quantity of REs used for data transmission in the first RBG | N₁ | P_{1, seq} | N₂ | P_{2, seq} |
|---|---|---|---|---|
| 312 | 13 | [3, 5, 5] | 24 | [7, 8, 9] |
| | 12 | [3, 4, 5] | 26 | [8, 9, 9] |
| 288 | 12 | [3, 4, 5] | 24 | [7, 8, 9] |
| | 9 | [3, 3, 3] | 32 | [10, 11, 11] |
| 264 | 11 | [2, 4, 5] | 24 | [7, 8, 9] |
| | 12 | [3, 4, 5] | 22 | [5, 8, 9] |
| 240 | 10 | [4, 2, 4] | 24 | [7, 8, 9] |
| | 12 | [3, 4, 5] | 20 | [6, 7, 7] |
| | 15 | [5, 5, 5] | 16 | [3, 6, 7] |

As shown in Table 14, one first RBG includes two RBs, one RB includes 14 symbols, and one symbol includes 12 REs, and therefore, one RB includes 168 REs. When 10, 11, 12, or 13 symbols are used to transmit data, a quantity of REs used for data transmission in one RB is 120, 132, 144, or 156 respectively. Therefore, the quantity of REs used for data transmission in the first RBG is 240, 264, 288, or 312.

When the quantity of REs used for data transmission in the first RBG is 312, values of N₁, N₂, P_{1, seq}, and P_{2, seq} may be shown in Table 14.

When the quantity of REs used for data transmission in the first RBG is 288, values of N₁, N₂, P_{1, seq}, and P_{2, seq} may be shown in Table 14.

When the quantity of REs used for data transmission in the first RBG is 264, values of N₁, N₂, P_{1, seq}, and P_{2, seq} may be shown in Table 14.

When the quantity of REs used for data transmission in the first RBG is 240, values of N₁, N₂, P_{1, seq}, and P_{2, seq} may be shown in Table 14.

When both the first sequence set and the second sequence set are generated based on Method #1, the first sequence set and the second sequence set may use different or same interference configurations. For details, refer to Table 15.

**Table 15**

| Interference configuration corresponding to the first sequence set | Interference configuration corresponding to the second sequence set |
|---|---|
| Interference configuration 2 | Interference configuration 1 |
| Interference configuration 3 | Interference configuration 1 |
| Interference configuration 1 | Interference configuration 2 |
| Interference configuration 1 | Interference configuration 3 |
| Interference configuration 2 | Interference configuration 2 |
| Interference configuration 3 | Interference configuration 3 |
| Interference configuration 3 | Interference configuration 4 |
| Interference configuration 3 | Interference configuration 5 |

As shown in Table 15, it may be understood that the first sequence set and the second sequence set respectively use different or same interference configurations, and for the first sequence set and the second sequence set, quantities of sequences are different, degrees of interference between sequences are different, and quantities of supported devices are different.

In conclusion, the first sequence set and the second sequence set may be generated based on Method #1 or Method #2, the first sequence is determined from the first sequence set, the second sequence is determined from the second sequence set, and the K₁*K₂ first resources are determined based on the first sequence and the second sequence.

S203: The first apparatus transmits the first data through the K₁*K₂ first resources.

For example, the first apparatus may send the first data to the second apparatus through the K₁*K₂ first resources, or the first apparatus may receive the first data from the second apparatus through the K₁*K₂ first resources.

In the foregoing solution, one second resource includes N₁ first resources, and the N₂ second resources include a total of N₂*N₁ first resources. The first apparatus selects K₁*K₂ first resources from the N₂*N₁ first resources, and completes transmission of the first data based on the K₁*K₂ first resources. Different devices select respective K₁*K₂ first resources from the N₂*N₁ first resources. This helps reduce a probability of interference between data transmission of different devices or reduce a degree of interference between data transmission of different devices.

The nesting relationship between the first resource and the second resource is constructed, so that interference between data transmission of different devices can be reduced. For example, different devices select respective K₂ second resources from the N₂ second resources, and select the K₁*K₂ first resources based on the respective K₂ second resources. In this way, different devices can select different quantities of K₁*K₂ first resources to simultaneously perform data transmission (that is, different devices can send data packets of different sizes, or different devices can send data of different bit rates), thereby effectively reducing a probability that resources selected by different devices overlap, and therefore, different quantities of devices can be flexibly supported.

In a possible implementation, one first resource includes F REs, and F is a positive integer. The N2 second resources include N₁*N₂*F REs. The first apparatus may transmit the first data through the K₁*K₂*F REs.

Each first resource includes F REs, and complexity is low, so that overheads of signaling indication can be reduced. In addition, the first data is sent through K₁*K₂*F resource elements, so that a quantity of REs for sending the first data can be simply determined.

In this embodiment of this application, the N₁*N₂*F REs included in the N₂ second resources correspond to the REs used for data transmission in the first RBG. The first RBG includes at least one RB, and each RB includes 168 REs. The N₁*N₂*F REs one-to-one correspond to the REs used for data transmission in the first RBG.

Because the first RBG may include a resource used for data transmission and a resource used for reference signal transmission, and may further include a resource used for another purpose, the K₁*K₂*F REs one-to-one correspond to K₁*K₂*F REs in the first RBG, so that positions of the K₁*K₂*F REs in the first RBG can be determined, and further positions of the K₁*K₂*F REs in all resources included in the system can be determined.

In a possible implementation, the first RBG includes an RE used for data transmission and another RE. The another RE may be used to transmit a reference signal, or the another RE may be used to estimate a channel of the RE used for data transmission, to assist in demodulating data.

In a possible implementation, a quantity of REs used for data transmission in the first RBG may be greater than the N₁*N₂*F REs included in the N₂ second resources. In this case, the N₁*N₂*F REs included in the N₂ second resources one-to-one correspond to the N₁*N₂*F REs in the REs used for data transmission in the first RBG.

In a possible implementation, a mapping sequence may be determined, and a correspondence between the N₁*N₂*F REs and the REs used for data transmission in the first RBG is determined based on the mapping sequence. For example, the mapping sequence is represented as T, T includes N₂*N₁*F elements, and a u^{th} RE in the N₁*N₂*F REs corresponds to a Tᵤ^{th} RE in the first RBG, or corresponds to a Tᵤ^{th} RE in the REs used for data transmission in the first RBG, where u=0, ..., N₂* N₁*F-1.

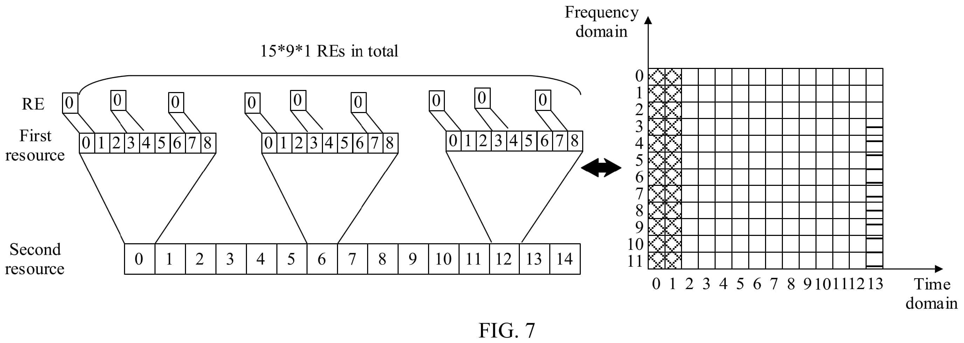

In a possible implementation, the correspondence may alternatively be predefined, and the correspondence between the N₁*N₂*F REs and the REs used for data transmission in the first RBG is determined based on the predefined correspondence. For example, the N₁*N₂*F REs first correspond to the REs used for data transmission in the first RBG in an index ascending direction of the REs (that is, an ascending index direction of the REs in frequency domain), and then correspond to the REs used for data transmission in the first RBG in an ascending symbol index direction; or the N₁*N₂*F REs first correspond to the REs used for data transmission in the first RBG in an ascending symbol index direction, and then correspond to the REs used for data transmission in the first RBG in an ascending index direction of the REs. For details, refer to FIG. 7.

FIG. 7 is a diagram of a relationship between a second resource and an RBG according to an embodiment of this application. As shown in FIG. 7, N₁=9, N₂=15, F=1, and the N₂ second resources include 135 REs. The first RBG includes one RB, one RB includes 14 symbols, each symbol includes 12 REs, two symbols are used to transmit a reference signal (referring to cross texture blocks in FIG. 7), and a quantity of REs used to transmit data is 144.

As shown in FIG. 7, it is predefined that the N₁*N₂*F REs first correspond to the REs used for data transmission in the first RBG in the index ascending direction of the REs, and then correspond to the REs used for data transmission in the first RBG in the ascending symbol index direction. Therefore, in the 144 REs, the last nine REs in the last symbol do not one-to-one correspond to the 135 REs included in the N₂ second resources.

In this embodiment of this application, a quantity of REs in one first RBG needs to be greater than or equal to a quantity of REs included in the N₂ second resources, and a quantity of REs used for data transmission in one first RBG needs to be greater than or equal to a quantity of REs included in the N₂ second resources. The N₂*N₁*F REs in the REs used for data transmission in the first RBG one-to-one correspond to the N₂*N₁*F REs.

When R RBGs are allocated to the terminal device (the first RBG may be one of the R RBGs), each RBG corresponds to one first sequence set and one second sequence set.

Optionally, each RBG may correspond to a same first RU, and may also correspond to a same second RU.

Optionally, each RBG may correspond to a different first RU, and may also correspond to a different second RU.

Optionally, either the first RUs or the second RUs corresponding to all RBGs are the same, while the remaining RUs are different. This is not limited.

Optionally, the second sequence set is associated with an index of the first RBG. The index of the first RBG indicates a position of the first RBG in at least one RBG, the at least one RBG includes a configured RBG used for data transmission, and the at least one RBG may be R RBGs.

The at least one RBG includes the configured RBG used for data transmission, and all resources used for data transmission may be determined based on the at least one RBG. The second sequence set is associated with the index of the first RBG. A second sequence set corresponding to each of the at least one RBG may be determined based on the index of the first RBG, and then the second sequence is determined. Further, positions of the K₁*K₂ first resources for data transmission in each of the at least one RBG may be determined.

Optionally, the first sequence set is associated with the index of the first RBG. The index of the first RBG indicates a position of the first RBG in at least one RBG, the at least one RBG includes a configured RBG used for data transmission, and the at least one RBG may be R RBGs.

The at least one RBG includes the configured RBG used for data transmission, and all resources used for data transmission may be determined based on the at least one RBG. The first sequence set is associated with the index of the first RBG. A first sequence set corresponding to each of the at least one RBG may be determined based on the index of the first RBG, and then the first sequence is determined. Further, positions of the K₁*K₂ first resources for data transmission in each of the at least one RBG may be determined.

In a possible implementation, each of the R RBGs corresponds to a same first sequence set and a same second sequence set. Further, each RBG selects a same first sequence and a same second sequence.

For example, R=2 is used as an example. A 1^{st} first RBG corresponds to a first sequence set and a second sequence set, and a 2^{nd} RBG also corresponds to the first sequence set and the second sequence set. The 1^{st} RBG selects a 1^{st} sequence in the first sequence set and a 1^{st} sequence in the second sequence set, and the 2^{nd} RBG may also select the 1^{st} sequence in the first sequence set and the 1^{st} sequence in the second sequence set.

When each RBG corresponds to a same first sequence set and a same second sequence set, each RBG may determine a corresponding first sequence and second sequence based on an index of the RBG.

For example, the first sequence set includes four sequences, the second sequence set includes four sequences, and R=4.

A 1^{st} RBG selects a 1^{st} sequence in the first sequence set and a 1^{st} sequence in the second sequence set.

A 2^{nd} RBG selects a 2^{nd} sequence in the first sequence set and a 2^{nd} sequence in the second sequence set.

A 3^{rd} RBG selects a 3^{rd} sequence in the first sequence set and a 3^{rd} sequence in the second sequence set.

A 4^{th} RBG selects a 4^{th} sequence in the first sequence set and a 4^{th} sequence in the second sequence set.

In conclusion, the first sequence and the second sequence selected by each RBG are related to an index of the RBG.

It should be noted that the index of the first RBG indicates the position of the first RBG in the at least one RBG, and the at least one RBG is configured RBGs (for example, the R RBGs) used for data transmission, or is RBGs (may be more than the R RBGs) included in the system.

Optionally, at least one resource block group is a resource block group included in the system, the resource block group included in the system may be a resource block group configured for a cell, and the first apparatus is located in the cell.

Optionally, a resource element included in the at least one RBG is a resource element included in the system, the resource element included in the system may be a resource element configured for a cell, and the first apparatus is located in the cell. The resource element configured for a cell may be a resource element included in a time unit (for example, one OFDM symbol).

Optionally, a quantity of resource elements configured for a cell may be a quantity of inverse discrete Fourier transform points.

For example, in a long term evolution system, if a subcarrier spacing configured for the cell is 15 kHz, and a quantity of resource elements included in one symbol is 1024 (that is, the quantity of inverse discrete Fourier transform points is 1024), the at least one RBG includes 1024 resource elements.

Optionally, the at least one RBG is a maximum quantity of configured resource block groups that can be used for data transmission, or the at least one RBG includes a maximum quantity of resource elements that can be used for data transmission. The maximum quantity of resource block groups that can be used for data transmission corresponds to one time unit.

The maximum quantity of resource block groups that can be used for data transmission may mean a maximum quantity of resource blocks that can be used when a device in a cell performs data transmission. A maximum quantity of resources that can be used for data transmission may mean a maximum quantity of resource elements that can be used when a device in a cell performs data transmission.

For example, in the long term evolution system, if a subcarrier spacing configured for the cell is 15 kHz, a quantity of resource elements included in one symbol is 1024 (that is, the quantity of inverse discrete Fourier transform points is 1024), and a maximum quantity of resource elements that can be used for data transmission in one symbol is 600, the at least one RBG includes 600 resource elements.

Optionally, the at least one RBG is an RBG included in a bandwidth part.

Optionally, an RE included in the at least one RBG is an RE included in a bandwidth part (bandwidth part, BWP). The bandwidth part may correspond to the first apparatus, and the bandwidth part may be predefined or indicated based on signaling. This is not limited in this application.

It should be noted that the foregoing content is described by using an example in which the first RBG is one RBG. However, the first RBG may alternatively be a plurality of RBGs. For example, the first RBG is two RBGs. When the system allocates the R RBGs to the terminal device, the R RBGs may be divided into G groups, where each group includes two RBGs, and in this case, the first RBG is one of the G groups of RBGs. Correspondingly, for descriptions of each group of RBGs, refer to the foregoing descriptions of each RBG. Details are not described again.

When the first sequence set and the second sequence set are generated based on Method #1, the first sequence and the second sequence may be related to an index of an RBG. For example, the index of the RBG is represented as *j_{b}*. The interference configuration 3 is used as an example, and sequences in a sequence set may be represented as follows: ${S}_{{i}_{1} ∗ P + {i}_{0}} \left(k\right) = k ∗ P + \left(\left(k+{j}_{b}∗K\right)∗{i}_{1}+{i}_{0}\right) mod P , {i}_{0} , {i}_{1} = 0 , 1 , … , P - 1$ or ${S}_{{i}_{1} ∗ P + {i}_{0}} \left(k\right) = k ∗ P + \left(\left(k+{j}_{b}∗K\right)∗{i}_{1}+{i}_{0}+{Δ}_{4}\right) mod P , {i}_{0} , {i}_{1} = 0 , 1 , … , P - 1$

Herein, Δ₄ is an offset, Δ₄ is an integer, and Δ₄ may be predefined or indicated based on signaling.

Optionally, after the sequence set is generated according to Formula 13-a or Formula 13-b, an index corresponding to each sequence in the sequence set may not correspond to an original index in Formula 13-a or Formula 13-b. FIG. 6 is used as an example. After the sequence set is generated according to Formula 13-a or Formula 13-b, the sequence set includes nine sequences. For example, the sequence set includes W₀ to W₈, and subscripts in W₀ to W₈ are subscripts (for example, i₁*P+i₀) in Formula 13-a or Formula 13-b. W₀ may correspond to S₀ in FIG. 6, or may correspond to S₁ in FIG. 6. This is not limited.

In conclusion, after the sequence set is generated according to the foregoing plurality of formulas, the sequences in the sequence set may be reordered, and new indexes are reconfigured for the reordered sequences. The new index may be different from or the same as an original index. This is not limited herein.

In this way, when selecting the first sequence and the second sequence, each RBG may determine a proper first sequence and a proper second sequence based on an index of the RBG.

In this embodiment of this application, extension processing may be performed on data in an extension sequence manner, to enhance anti-interference performance of data transmission.

In a possible implementation, that the first apparatus transmits the first data through the K₁*K₂ first resources includes:
determining a third sequence, where the third sequence includes F elements, the third sequence is used to spread second data, sent in one RE, to F REs for transmission, an i^{th} piece of data sent in an i^{th} RE in the F REs is determined based on the second data and an i^{th} element in the F elements, i=0, ..., F-1, and the first resource includes the F REs; and
determining the first data based on the third sequence and the second data.

When the second data is data transmitted on one RE, to enhance anti-interference performance in a data transmission process, the third sequence may be used. The third sequence includes the F elements, and each of the F elements may be multiplied by the second data, so that new data can be obtained.

After extension processing is performed on the second data, if data transmitted in one first resource is the same, and data transmitted in one RE of each first resource is the second data, data transmitted in the K₁ first resources is the same; or if data transmitted in one RE of each first resource is distinct, data transmitted in the K₁ first resources is different. Therefore, the first data is determined based on the data transmitted in the K₁ first resources. The third sequence is constructed, which can enhance anti-interference performance of data transmission.

The third sequence may alternatively be represented as S_{sprcad}, the third sequence includes L_{spread} elements, and a value of each element is not 0. The third sequence may be a sequence in an extension sequence set, the extension sequence set may include L_{spread} orthogonal sequences, and the L_{spread} orthogonal sequences may be orthogonal cover codes (orthogonal cover code, OCC) with a length of L_{spread}, or may include each row/column of a Fourier transform matrix with a length of L_{spread}. A sequence in the extension sequence set may alternatively be non-orthogonal. This is not limited in this application.

The third sequence is constructed, and the third sequence is used to spread the second data, sent in one RE, to the F REs for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In a possible implementation, that the first apparatus transmits the first data through the K₁*K₂ first resources includes:
determining a third sequence, where the third sequence includes F elements, the third sequence is used to spread second data, sent in one resource element, to F resource elements for transmission, an i^{th} piece of data sent in an i^{th} resource element in the F resource elements is determined based on the second data and an i^{th} element in the F elements, and i=0, ..., F-1; and
each first resource includes F₁ resource elements; and determining, based on the third sequence and the second data, data in the K₁ first resources (K₁*F₁ resource elements) of each second resource, to determine the first data. K₁*F₁ is a multiple of F.

Specifically, there may be K₁*F₁/F pieces of second data. Data, of each piece of second data, transmitted in the F resource elements may be determined based on the third sequence, and then data, of the K₁*F₁/F pieces of second data, transmitted in the total K₁*F₁ resource elements may be determined. The data, of the K₁*F₁/F pieces of second data, transmitted in the total K₁*F₁ resource elements is data, of one second resource, transmitted in the K₁ first resources (K₁*F₁ resource elements).

In a possible implementation, that the first apparatus transmits the first data through the K₁*K₂ first resources includes:
determining a fourth sequence, where the fourth sequence includes K₁ elements, the fourth sequence is used to spread third data, sent in one first resource, to the K₁ first resources for transmission, an i^{th} piece of data sent in an i^{th} first resource in the K₁ first resources is determined based on the third data and an i^{th} element in the K₁ elements, and i=0, ..., K₁-1; and
determining the first data based on the fourth sequence and the third data.

When the third data is data transmitted in one first resource, to enhance anti-interference performance in a data transmission process, the fourth sequence may be used. The fourth sequence includes the K₁ elements, and each of the K₁ elements may be multiplied by the third data, so that new data can be obtained.

After extension processing is performed on the third data, if data transmitted in one second resource is the same, and data transmitted in one first resource in each second resource is the third data, data transmitted in the K₂ second resources is the same; or if data transmitted in the first resource of each second resource is distinct, data transmitted in the K₂ second resources is different. Therefore, the first data is determined based on the data transmitted in the K₂ second resources. The fourth sequence is constructed, which can enhance anti-interference performance of data transmission.

For descriptions of the fourth sequence, refer to the foregoing descriptions of the third sequence. Details are not described again.

The fourth sequence is constructed, and the fourth sequence is used to spread the third data, sent in one first resource, to the K₁ first resources for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In a possible implementation, that the first apparatus transmits the first data through the K₁*K₂ first resources includes:
determining a fifth sequence, where the fifth sequence includes K₂ elements, the fifth sequence is used to spread fourth data, sent in one second resource, to the K₂ second resources for transmission, an i^{th} piece of data sent in an i^{th} second resource in the K₂ second resources is determined based on the fourth data and an i^{th} element in the K₂ elements, and i=0, ..., K₂-1; and
determining the first data based on the fifth sequence and the fourth data.

When the fourth data is data transmitted in one second resource, to enhance anti-interference performance in a data transmission process, the fifth sequence may be used. The fifth sequence includes K₂ elements, and each of the K₂ elements may be multiplied by the fourth data, so that new data can be obtained.

After extension processing is performed on the fourth data, data transmitted in the K₂ second resources is the same. Therefore, the first data is determined based on the data transmitted in the K₂ second resources. The fifth sequence is constructed, which can enhance anti-interference performance of data transmission.

For descriptions of the fifth sequence, refer to the foregoing descriptions of the third sequence. Details are not described again.

The fifth sequence is constructed, and the fifth sequence is used to spread the fourth data, sent in one second resource, to the K₂ second resources for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

In this embodiment of this application, in a possible implementation, the method further includes:
determining a sixth sequence, where the sixth sequence includes D elements, the sixth sequence is used to spread the first data, sent in one third resource, to D third resources for transmission, an i^{th} piece of data sent in an i^{th} third resource in the D third resources is determined based on the first data and an i^{th} element in the D elements, the third resource includes the N₂ second resources, D is a positive integer greater than 1, and i=0, ..., D-1;
determining fifth data based on the sixth sequence and the first data; and
sending the fifth data through D*K₁*K₂ first resources.

When the first data is data transmitted in the K₁*K₂ first resources, to enhance anti-interference performance in a data transmission process, the sixth sequence may be used. The sixth sequence includes the D elements, and each of the D elements may be multiplied by the first data, so that new data can be obtained.

After extension processing is performed on the first data, data transmitted in the D third resources is the same. Therefore, the first data is determined based on the data transmitted in the D third resources. The sixth sequence is constructed, which can enhance anti-interference performance of data transmission.

For descriptions of the sixth sequence, refer to the foregoing descriptions of the third sequence. Details are not described again.

The sixth sequence is constructed, and the sixth sequence is used to spread the fourth data, sent in one third resource, to the D third resources for transmission. This can effectively improve anti-interference performance of data transmission. When extension is supported, different devices can select different quantities of K₁*K₂ first resources to simultaneously perform data transmission (that is, different devices can send data packets of different sizes, or different devices can send data of different bit rates).

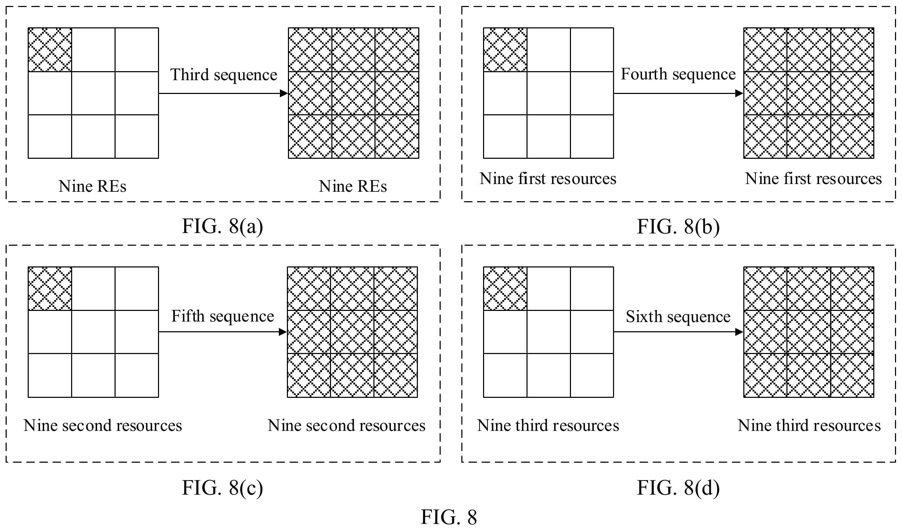

For further descriptions of the extension sequence, refer to FIG. 8.

FIG. 8 is a diagram of a relationship between an extension sequence and different resources according to an embodiment of this application. As shown in FIG. 8(a), one first resource includes nine REs, and data transmitted in one RE is the second data. In this case, the second data transmitted in the RE may be spreaded to the nine REs for transmission based on the extension sequence (for example, the third sequence). In this case, data transmitted in one first resource is data obtained by spreading the second data. As shown in FIG. 8(b), data transmitted in one first resource is the third data. In this case, the data transmitted in the first resource may be spreaded to nine first resources (Ki=9) for transmission based on the extension sequence (for example, the fourth sequence). In this case, the data transmitted in the nine first resources is data obtained by spreading the third data. As shown in FIG. 8(c), data transmitted in one second resource is the fourth data. In this case, the data transmitted in the second resource may be spreaded to nine second resources (K₂=9) for transmission based on the extension sequence (for example, the fifth sequence). As shown in FIG. 8(d), data transmitted in one third resource is the first data. In this case, the data transmitted in the third resource may be spreaded to nine third resources for transmission based on the extension sequence (for example, the sixth sequence).

According to the foregoing solution, in this embodiment of this application, the first apparatus can select the K₁*K₂ first resources from the N₁*N₂ first resources to transmit the first data. The foregoing content is described by using an example in which the first apparatus first determines the K₂ second resources in the N₂ second resources, and then determines the K₁*K₂ first resources from the K₂ second resources.

In this embodiment of this application, the first apparatus may alternatively first determine the K₁ first resources in the N₁ first resources, and then determine the K₂ second resources from the N₂ second resources, so that the K₁*K₂ first resources can be determined, and the first data is transmitted based on the K₁*K₂ first resources.

In conclusion, an embodiment of this application provides a solution in which the first apparatus determines, based on a design that the first resource and the second resource meet the nesting relationship, the K₁*K₂ first resources from the N₁*N₂ first resources to transmit the first data. During specific application, the first apparatus may first determine the K₂ second resources, then determine the K₁ first resources (which may be understood as that the K₁ first resources are the same or related across all the second resources), and finally determine the K₁*K₂ first resources; or the first apparatus may first determine the K₁ first resources (which may be understood as that the K₁ first resources are the same or related across all the second resources), then determine the K₂ second resources, and finally determine the K₁*K₂ first resources. This is not limited herein.

Finally, apparatus embodiments in embodiments of this application are described.

To implement functions in the method provided in this application, both the first apparatus and the second apparatus may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

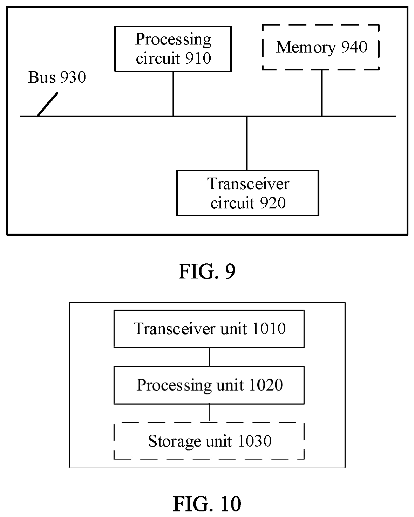

FIG. 9 is a block diagram of a communication apparatus according to an embodiment of this application. The communication apparatus includes a processing circuit 910 and a transceiver circuit 920. The processing circuit 910 and the transceiver circuit 920 may be connected or coupled to each other, for example, connected to each other through a bus 930. The communication apparatus may be a first apparatus or a second apparatus.

Optionally, the communication apparatus may further include a memory 940. The memory 940 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 940 is configured to store related instructions and data.

The processing circuit 910 may be all or a part of processing circuits in one or more processors, or may be one or more processors. The processor may be a central processing unit (central processing unit, CPU). When the processing circuit 910 is one CPU, the CPU may be a single-core CPU or a multi-core CPU. The processing circuit 910 may be a signal processor, a chip, or another integrated circuit that can implement the method in this application, or a partial circuit that is in the foregoing processor, chip, or integrated circuit and that is configured to perform a processing function. In addition, the transceiver circuit 920 may alternatively be a transceiver or an input/output interface. The input/output interface is configured to input or output a signal or data, and may also be referred to as an input/output circuit.

When the communication apparatus is the first apparatus, for example, the processing circuit 910 is configured to perform the following operations: determining K₂ second resources in N₂ second resources; determining K₁*K₂ first resources; and sending or receiving first data through the K₁*K₂ first resources.

When the communication apparatus is the second apparatus, for example, the processing circuit 910 is configured to perform the following operations: determining K₂ second resources in N₂ second resources; determining K₁*K₂ first resources; and receiving or sending first data through the K₁*K₂ first resources.

The foregoing content is merely used as an example for description. When the communication apparatus is the first apparatus or the second apparatus, the communication apparatus is responsible for performing the method or steps related to the first apparatus or the second apparatus in the foregoing method embodiments.

When the communication apparatus is the first apparatus or the second apparatus, the transceiver circuit 920 may be a transceiver. When the communication apparatus is a chip used in the first apparatus or the second apparatus, the transceiver circuit 920 may be an input/output circuit. The foregoing descriptions are merely examples.

For specific content, refer to content shown in the method embodiments. For implementations of all operations in FIG. 9, refer to corresponding descriptions in the method embodiments shown in FIG. 6 to FIG. 9.

FIG. 10 is a block diagram of another communication apparatus according to an embodiment of this application. The communication apparatus may be a first apparatus or a second apparatus, and is configured to implement the method in the foregoing embodiments.

The communication apparatus includes a transceiver unit 1010 and a processing unit 1020. The following describes the transceiver unit 1010 and the processing unit 1020 by using examples.

The transceiver unit 1010 may include a sending unit and a receiving unit. The sending unit is configured to perform a sending action of the communication apparatus, and the receiving unit is configured to perform a receiving action of the communication apparatus. For ease of description, in embodiment of this application, the sending unit and the receiving unit are combined into one transceiver unit. This applies throughout and will not be repeated below.

When the communication apparatus is the first apparatus, for example, the transceiver unit 1010 is configured to send or receive first data through K₁*K₂ first resources; and the processing unit 1020 is configured to determine K₂ second resources in N₂ second resources and determine the K₁*K₂ first resources. The processing unit 1020 is configured to perform content related to steps such as processing and control of the first apparatus.

When the communication apparatus is the second apparatus, for example, the transceiver unit 1010 is configured to receive or send first data through K₁*K₂ first resources; and the processing unit 1020 is configured to determine K₂ second resources in N₂ second resources and determine the K₁*K₂ first resources. The processing unit 1020 is configured to perform content related to steps such as processing and control of the second apparatus.

When the communication apparatus is the first apparatus or the second apparatus, the communication apparatus is responsible for performing one or more of the method or steps related to the first apparatus or the second apparatus in the foregoing method embodiments.

Optionally, the communication apparatus further includes a storage unit 1030. The storage unit 1030 is configured to store a program or code used for performing the foregoing method.

It should be noted that the transceiver unit in FIG. 10 may correspond to the transceiver circuit in FIG. 9, and the processing unit in FIG. 10 may correspond to the processing circuit in FIG. 9.

The apparatus embodiments shown in FIG. 9 and FIG. 10 are used to implement the content described in FIG. 2. For specific execution steps and methods of the apparatuses shown in FIG. 9 and FIG. 10, refer to the content described in the foregoing method embodiments.

This application further provides a chip, including a processor, configured to: invoke instructions from a memory and run the instructions stored in the memory, so that a communication device on which the chip is installed performs the methods in the foregoing examples. The memory may be integrated into the chip, or may be located outside the chip.

This application further provides another chip, including: an input interface, an output interface, and a processing circuit, where the input interface, the output interface, and the processor are connected through an internal connection path, the processing circuit is configured to execute code in a memory, and when the code is executed, the processing circuit is configured to perform the methods in the foregoing examples. Optionally, the chip further includes the memory. The memory is configured to store a computer program or the code. The input interface and the output interface may be independent of each other, or may be integrated into an input/output interface.

The processing circuit may be all or a part of processing circuits in one or more processors, or may be one or more processors.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the foregoing embodiments may be implemented using software, hardware, firmware, or any combination thereof. When software is used to implement embodiments, the foregoing embodiments may be implemented completely or partially in a form of computer program product. The computer program product includes one or more computer instructions or computer programs. When the computer instructions or computer programs are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, a magnetic tape), an optical medium (for example, a DVD), or a semiconductor medium. The semiconductor medium may be a solid-state drive.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. A part or all of the units may be selected as required to achieve the objectives of the solutions of embodiments. In addition, functional units in embodiments of this application may be integrated into one processing unit, each of the units may exist independently physically, or two or more units may be integrated into one unit. When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, for example, a USB flash disk, a removable hard disk, a read-only memory, a random access memory, a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A transmission method, comprising:
determining K₂ second resources in N₂ second resources, wherein each second resource comprises N₁ first resources, N₂ is an integer greater than or equal to K₂, K₂ is a positive integer, and the N₂ second resources are configured resources used for data transmission;
determining K₁*K₂ first resources, wherein the K₁*K₂ first resources belong to N₁*N₂ first resources, N₁ is an integer greater than or equal to K₁, and K₁ is a positive integer; and
transmitting first data through the K₁*K₂ first resources.

2. The method according to claim 1, wherein determining the K₂ second resources in the N₂ second resources comprises:
determining the K₂ second resources from the N₂ second resources based on a second sequence.

3. The method according to claim 2, wherein before determining the K₂ second resources from the N₂ second resources based on the second sequence, the method further comprises:
determining an index of the second sequence; and
determining the second sequence from a second sequence set based on the index of the second sequence, wherein a quantity of sequences in the second sequence set is related to N₂ and K₂.

4. The method according to claim 3, wherein a quantity of same elements in any two sequences in the second sequence set is less than or equal to L₂, the quantity of sequences in the second sequence set is related to L₂, and L₂ is an integer.

5. The method according to any one of claims 1 to 4, wherein determining the K₁*K₂ first resources comprises:
determining K₁ first resources from each second resource in the K₂ second resources.

6. The method according to claim 5, wherein determining the K₁ first resources from each second resource in the K₂ second resources comprises:
determining the K₁ first resources from the N₁ first resources based on a first sequence.

7. The method according to claim 6, wherein
positions of the K₁ first resources in the N₁ first resources are the same across all the second resources; or
positions of the K₁ first resources in the N₁ first resources are different across all the second resources.

8. The method according to claim 6 or 7, before determining the K₁ first resources from the N₁ first resources based on the first sequence, the method comprises:
determining an index of the first sequence; and
determining the first sequence from a first sequence set based on the index of the first sequence, wherein a quantity of sequences in the first sequence set is related to N₁ and K₁.

9. The method according to claim 8, wherein a quantity of same elements in any two sequences in the first sequence set is less than or equal to L₁, the quantity of sequences in the first sequence set is related to L₁, and L₁ is an integer.

10. The method according to any one of claims 1 to 9, wherein the N₂ second resources comprise K₂ groups of second resources, each group of second resources comprises Q₂ second resources, Q₂=N₂/K₂, Q₂ is an integer, and a j^{th} sequence Sⱼ in the second sequence set satisfies: ${S}_{j} \left(k\right) = k ∗ {Q}_{2} + \left({\sum }_{l = 0}^{{L}_{2}} {k}^{l} ∗ {i}_{l}\right) mod {Q}_{2} , {i}_{l} = 0 , … , {Q}_{2} - 1 ,$ wherein $j = {\sum }_{l = 0}^{{L}_{2}} {\left({Q}_{2}\right)}^{l} \times {i}_{l} ,$ the second sequence set comprises (*Q*₂)^{*L*₂+1} sequences, and k=0, ..., K₂-1.

11. The method according to any one of claims 1 to 10, wherein the N₁ first resources comprise K₁ groups of first resources, each group of first resources comprises Q₁ first resources, Q₁=N₁/K₁, Q₁ is an integer, and a t^{th} sequence St in the first sequence set satisfies: ${S}_{t} \left(k\right) = k ∗ {Q}_{1} + \left({\sum }_{l = 0}^{{L}_{1}} {k}^{l} ∗ {i}_{l}\right) mod {Q}_{1} , {i}_{l} = 0 , … , {Q}_{1} - 1 ,$ wherein $t = {\sum }_{l = 0}^{{L}_{1}} {\left({Q}_{1}\right)}^{l} \times {i}_{l} ,$ the second sequence set comprises (*Q*₁)^{*L*₁+1} sequences, and k=0, ..., Ki-1.

12. The method according to any one of claims 1 to 11, wherein the method further comprises:
determining a first resource block group, wherein the N₁*N₂ first resources one-to-one correspond to N₁*N₂ first resources in the first resource block group, wherein
the first resource block group comprises at least one resource block; or
the first resource block group comprises a part of one resource block.

13. The method according to claim 12, wherein the second sequence set is associated with an index of the first resource block group; and
the index of the first resource block group indicates a position of the first resource block group in at least one resource block group; and
the at least one resource block group comprises a configured resource block group used for data transmission, or
the at least one resource block group is a resource block group comprised in a system.

14. The method according to claim 12 or 13, wherein the first sequence set is associated with the index of the first resource block group; and
the index of the first resource block group indicates the position of the first resource group in the at least one resource block group; and
the at least one resource block group comprises the configured resource block group used for data transmission, or
the at least one resource block group is the resource block group comprised in the system.

15. The method according to any one of claims 1 to 14, wherein transmitting the first data through the K₁*K₂ first resources comprises:
determining a third sequence, wherein the third sequence comprises F elements, the third sequence is used to spread second data, sent in one resource element, to F resource elements for transmission, an i^{th} piece of data sent in an i^{th} resource element in the F resource elements is determined based on the second data and an i^{th} element in the F elements, i=0, ..., F-1, and each first resource comprises F resource elements; and
determining the first data based on the third sequence and the second data.

16. The method according to any one of claims 1 to 14, wherein transmitting the first data through the K₁*K₂ first resources comprises:
determining a fourth sequence, wherein the fourth sequence comprises K₁ elements, the fourth sequence is used to spread third data, sent in one first resource, to the K₁ first resources for transmission, an i^{th} piece of data sent in an i^{th} first resource in the K₁ first resources is determined based on the third data and an i^{th} element in the K₁ elements, and i=0, ..., Ki-1; and
determining the first data based on the fourth sequence and the third data.

17. The method according to any one of claims 1 to 14, wherein transmitting the first data through the K₁*K₂ first resources comprises:
determining a fifth sequence, wherein the fifth sequence comprises K₂ elements, the fifth sequence is used to spread fourth data, sent in one second resource, to the K₂ second resources for transmission, an i^{th} piece of data sent in an i^{th} second resource in the K₂ second resources is determined based on the fourth data and an i^{th} element in the K₂ elements, and i=0, ..., K₂-1; and
determining the first data based on the fifth sequence and the fourth data.

18. The method according to any one of claims 1 to 14, wherein the method further comprises:
determining a sixth sequence, wherein the sixth sequence comprises D elements, the sixth sequence is used to spread the first data, sent in one third resource, to D third resources for transmission, an i^{th} piece of data sent in an i^{th} third resource in the D third resources is determined based on the first data and an i^{th} element in the D elements, the third resource comprises the N₂ second resources, D is a positive integer greater than 1, and i=0, ..., D-1;
determining fifth data based on the sixth sequence and the first data; and
sending the fifth data through D*K₁*K₂ first resources.

19. The method according to any one of claims 12 to 18, wherein the first resource group comprises a part of one resource block, and N₂ is equal to K₂.

20. A communication apparatus, comprising a processor, wherein the processor is configured to enable, by executing a computer program or instructions or via a logic circuit, the communication apparatus to perform the method according to any one of claims 1 to 19.

21. A communication apparatus, comprising a logic circuit and an input/output interface, wherein the input/output interface is configured to input and/or output a signal; and
the logic circuit is configured to perform the method according to any one of claims 1 to 19.

22. A communication apparatus, comprising:
a processing unit, configured to:
determine K₂ second resources in N₂ second resources, wherein each second resource comprises N₁ first resources, N₂ is an integer greater than or equal to K₂, K₂ is an integer, and the N₂ second resources are configured resources used for data transmission; and
determine K₁*K₂ first resources, wherein the K₁*K₂ first resources belong to N₂*N₂ first resources, N₁ is a positive integer greater than or equal to K₁, and K₁ is an integer; and
a transceiver unit, configured to transmit first data through the K₁*K₂ first resources.

23. The apparatus according to claim 22, wherein the processing unit is further configured to determine the K₂ second resources from the N₂ second resources based on a second sequence.

24. The apparatus according to claim 23, wherein the processing unit is further configured to:
determine an index of the second sequence; and
determine the second sequence from a second sequence set based on the index of the second sequence, wherein a quantity of sequences in the second sequence set is related to N₂ and K₂.

25. The apparatus according to claim 24, wherein a quantity of same elements in any two sequences in the second sequence set is less than or equal to L₂, the quantity of sequences in the second sequence set is related to L₂, and L₂ is an integer.

26. The apparatus according to any one of claims 22 to 25, wherein the processing unit is further configured to determine K₁ first resources from each second resource in the K₂ second resources.

27. The apparatus according to claim 26, wherein the processing unit is further configured to determine the K₁ first resources from the N₁ first resources based on a first sequence.

28. The apparatus according to claim 27, wherein
positions of the K₁ first resources in the N₁ first resources are the same across all the second resources; or
positions of the K₁ first resources in the N₁ first resources are different across all the second resources.

29. The apparatus according to claim 27 or 28, wherein the processing unit is further configured to:
determine an index of the first sequence; and
determining the first sequence from a first sequence set based on the index of the first sequence, wherein a quantity of sequences in the first sequence set is related to N₁ and K₁.

30. The apparatus according to claim 29, wherein a quantity of same elements in any two sequences in the first sequence set is less than or equal to L₁, the quantity of sequences in the first sequence set is related to L₁, and L₁ is an integer.

31. The apparatus according to any one of claims 22 to 30, wherein the N₂ second resources comprise K₂ groups of second resources, each group of second resources comprises Q₂ second resources, Q₂=N₂/K₂, Q₂ is an integer, and a j^{th} sequence Sⱼ in the second sequence set satisfies: ${S}_{j} \left(k\right) = k ∗ {Q}_{2} + \left({\sum }_{l = 0}^{{L}_{2}} {k}^{l} ∗ {i}_{l}\right) mod {Q}_{2} , {i}_{l} = 0 , … , {Q}_{2} - 1 ,$ wherein $j = {\sum }_{l = 0}^{{L}_{2}} {\left({Q}_{2}\right)}^{l} \times {i}_{l} ,$ the second sequence set comprises (*Q*₂)^{*L*₂+1} sequences, and k=0, ..., K₂-1.

32. The apparatus according to any one of claims 22 to 31, wherein the N₁ first resources comprise K₁ groups of first resources, each group of first resources comprises Q₁ first resources, Q₁=N₁/K₁, Q₁ is an integer, and a t^{th} sequence St in the first sequence set satisfies: ${S}_{t} \left(k\right) = k ∗ {Q}_{1} + \left({\sum }_{l = 0}^{{L}_{1}} {k}^{l} ∗ {i}_{l}\right) mod {Q}_{1} , {i}_{l} = 0 , … , {Q}_{1} - 1 ,$ wherein $t = {\sum }_{l = 0}^{{L}_{1}} {\left({Q}_{1}\right)}^{l} \times {i}_{l} ,$ the second sequence set comprises (*Q*₁)^{*L*₁+1} sequences, and k=0, ..., Ki-1.

33. The apparatus according to any one of claims 22 to 32, wherein the method further comprises:
determining a first resource block group, wherein the N₁*N₂ first resources one-to-one correspond to N₁*N₂ first resources in the first resource block group, wherein
the first resource block group comprises at least one resource block; or
the first resource block group comprises a part of one resource block.

34. The apparatus according to claim 33, wherein the second sequence set is associated with an index of the first resource block group; and
the index of the first resource block group indicates a position of the first resource block group in at least one resource block group; and
the at least one resource block group comprises a configured resource block group used for data transmission, or
the at least one resource block group is a resource block group comprised in a system.

35. The apparatus according to claim 33 or 34, wherein the first sequence set is associated with the index of the first resource block group; and
the index of the first resource block group indicates the position of the first resource group in the at least one resource block group; and
the at least one resource block group comprises the configured resource block group used for data transmission, or
the at least one resource block group is the resource block group comprised in the system.

36. The apparatus according to any one of claims 22 to 35, wherein the processing unit is further configured to:
determine a third sequence, wherein the third sequence comprises F elements, the third sequence is used to spread second data, sent in one resource element, to F resource elements for transmission, an i^{th} piece of data sent in an i^{th} resource element in the F resource elements is determined based on the second data and an i^{th} element in the F elements, i=0, ..., F-1, and each first resource comprises F resource elements; and
determine the first data based on the third sequence and the second data.

37. The apparatus according to any one of claims 22 to 35, wherein the processing unit is further configured to:
determine a fourth sequence, wherein the fourth sequence comprises K₁ elements, the fourth sequence is used to spread third data, sent in one first resource, to the K₁ first resources for transmission, an i^{th} piece of data sent in an i^{th} first resource in the K₁ first resources is determined based on the third data and an i^{th} element in the K₁ elements, and i=0, ..., Ki-1; and
determine the first data based on the fourth sequence and the third data.

38. The apparatus according to any one of claims 22 to 35, wherein the processing unit is further configured to:
determine a fifth sequence, wherein the fifth sequence comprises K₂ elements, the fifth sequence is used to spread fourth data, sent in one second resource, to the K₂ second resources for transmission, an i^{th} piece of data sent in an i^{th} second resource in the K₂ second resources is determined based on the fourth data and an i^{th} element in the K₂ elements, and i=0, ..., K₂-1; and
determine the first data based on the fifth sequence and the fourth data.

39. The apparatus according to any one of claims 22 to 35, wherein the processing unit is further configured to:
determine a sixth sequence, wherein the sixth sequence comprises D elements, the sixth sequence is used to spread the first data, sent in one third resource, to D third resources for transmission, an i^{th} piece of data sent in an i^{th} third resource in the D third resources is determined based on the first data and an i^{th} element in the D elements, the third resource comprises the N₂ second resources, D is a positive integer greater than 1, and i=0, ..., D-1;
determine fifth data based on the sixth sequence and the first data; and
send the fifth data through D*K₁*K₂ first resources.

40. The apparatus according to any one of claims 33 to 39, wherein the first resource group comprises a part of one resource block, and N₂ is equal to K₂.

41. A computer-readable storage medium, wherein the computer-readable storage medium stores a computer program or instructions, and when the computer program or the instructions are run on a computer, the method according to any one of claims 1 to 19 is performed.

42. A computer program product, comprising instructions, wherein when the instructions are run on a computer, the method according to any one of claims 1 to 19 is performed.

43. A chip system, wherein the chip system comprises a processor, a memory, and an input/output port, the memory is configured to store a computer program, and the processor is configured to execute the computer program stored in the memory, so that the processor performs the method according to any one of claims 1 to 19.
